# EUROPEAN PATENT APPLICATION

(11) **EP 4 425 996 A1**
(43) Date of publication of application: **04.09.2024**
(21) Application number: 22886849.3
(22) Date of filing: 20.10.2022
(51) Int. Cl.: H04W 24/10, H04W 36/00, H04W 76/10, H04W 48/16

(54) **TERMINAL DEVICE, BASE STATION DEVICE, MANAGEMENT DEVICE, AND COMMUNICATION METHOD**

(30) Priority: 26.10.2021 JP 2021175042
(71) Applicant: Sony Group Corporation, Tokyo 108-0075 (JP)
(72) Inventor: TSUDA, Shinichiro, Tokyo 108-0075 (JP)
(74) Representative: Witte, Weller & Partner Patentanwälte mbB
(86) International application number: PCT/JP2022/039077
(87) International publication number: WO 2023/074521

(57) **Abstract**

[Problem] To improve opportunities for communication using network slices.

[Means of Solution] A terminal device according to the present disclosure includes a transceiver and a processor, wherein the processor is configured to decide to use a first network slice of one or more network slices, perform a first measurement of one or more frequencies used for the first network slice, and when a result of the first measurement fulfills a threshold value, transmit a PDU session establishment request message or a service request message to a management device via an access node (AN), and is configured to acquire, from the AN, setting information prior to deciding to use the first network slice, the setting information including first information for setting the first measurement.

## Description

### [Technical Field]

The present disclosure relates to a terminal device, a base station device, a management device, and a communication method.

### [Background Art]

For a fifth generation mobile communication system, so-called 5G, which has features of high speed and large capacity (eMBB: enhanced Mobile BroadBand), low latency and high reliability (URLLC: Ultra-Reliable and Low Latency Communications), and multiple simultaneous connections (mMTC: Massive Machine Type Communication), the first standard was established as Rel-15 in 2018, and services compatible with 5G were launched in Japan in March 2020. 5G is expected to be used in a variety of services, and there are also a variety of communication requirements for the services. Accordingly, 5G uses a concept called network slicing. Since the communication characteristics required for each service (e.g., data rate, delay, etc.) differ, the communication services provided by 5G can be divided into units called network slices to provide each 5G service in a communication mode suitable for the service.

### [Citation List]

### [Patent Literature]

[PTL 1]
JP 2021-82859A

### [Summary]

### [Technical Problem]

Network slicing requires to provide communications with a wide range of different characteristics. For example, 5G supports not only low data rate communications such as Internet of Things (IoT) but also high data rate communications such as high resolution video distribution. In particular, for high data rate communications, it is expected to utilize frequencies in the millimeter-wave band, which can use a wide frequency band. However, the millimeter-wave band has a smaller cell coverage than the 700 MHz to 900 MHz frequency band called the platinum band the 2 GHz frequency band used in 3G and onwards because of a high straight advancing property and a large propagation loss. As a result, it is believed that it is not necessarily easy to two-dimensionally deploy cells that provide high data rate communications and thus, cells will be deployed in spots. Therefore, it is desirable to introduce a mechanism that matches the opportunity and availability of network slices that support high data rate communications.

In addition, in order to achieve wide coverage with cells operating in the millimeter-wave band that are installed in spots, it is necessary to install a large number of base stations. In other words, it is required to reduce the power consumption of cells operating in high frequency bands such as millimeter-wave bands.

The present disclosure provides a terminal device, a base station device, a management device, and a communication method that are capable of improving opportunities for communication using network slices.

### [Solution to Problem]

A terminal device according to the present disclosure includes a transceiver and a processor, wherein the processor is configured to decide to use a first network slice of one or more network slices, perform a first measurement of one or more frequencies used for the first network slice, and when a result of the first measurement fulfills a threshold value, transmit a PDU session establishment request message or a service request message to a management device via an access node (AN), and is configured to acquire, from the AN, setting information prior to deciding to use the first network slice, the setting information including first information for setting the first measurement.

### [Brief Description of Drawings]

[Fig. 1]

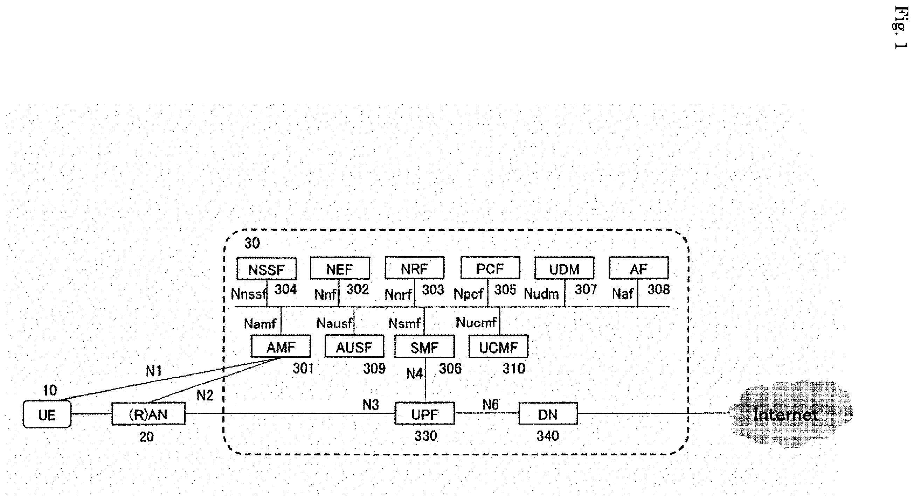

   Fig. 1 is a diagram illustrating a configuration of a 5G system (5GS) network architecture.
[Fig. 2]

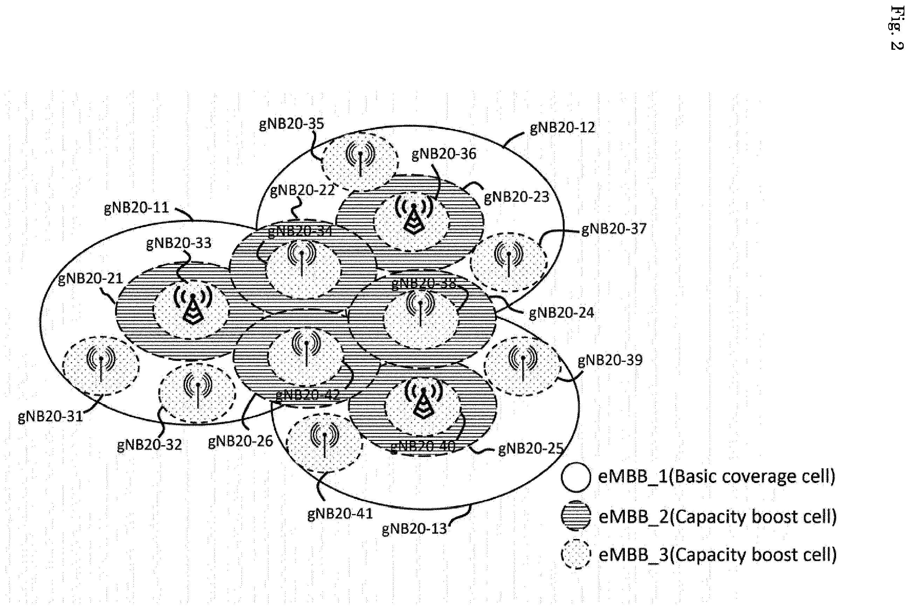

   Fig. 2 is a diagram illustrating an example of a network slice deployment scenario.
[Fig. 3]

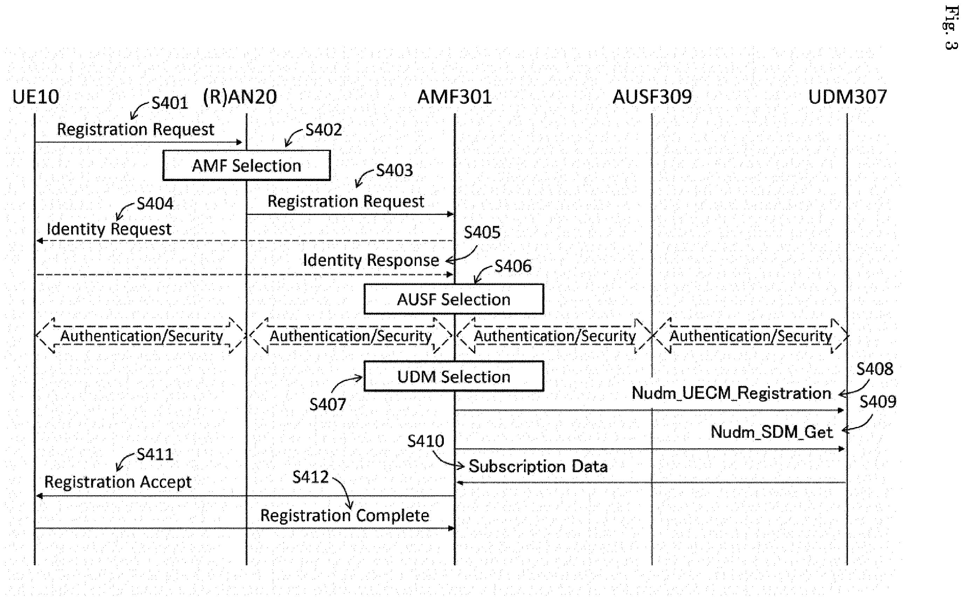

   Fig. 3 illustrates an example of a registration procedure.
[Fig. 4A]

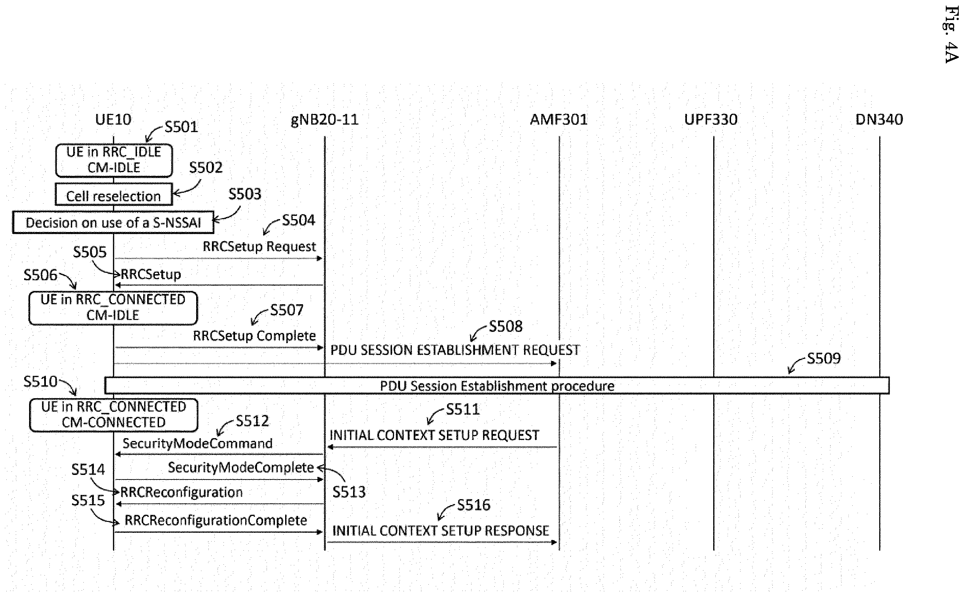

   Fig. 4A illustrates an example of a connection procedure for using S-NSSAI (eMBB_3).
[Fig. 4B]

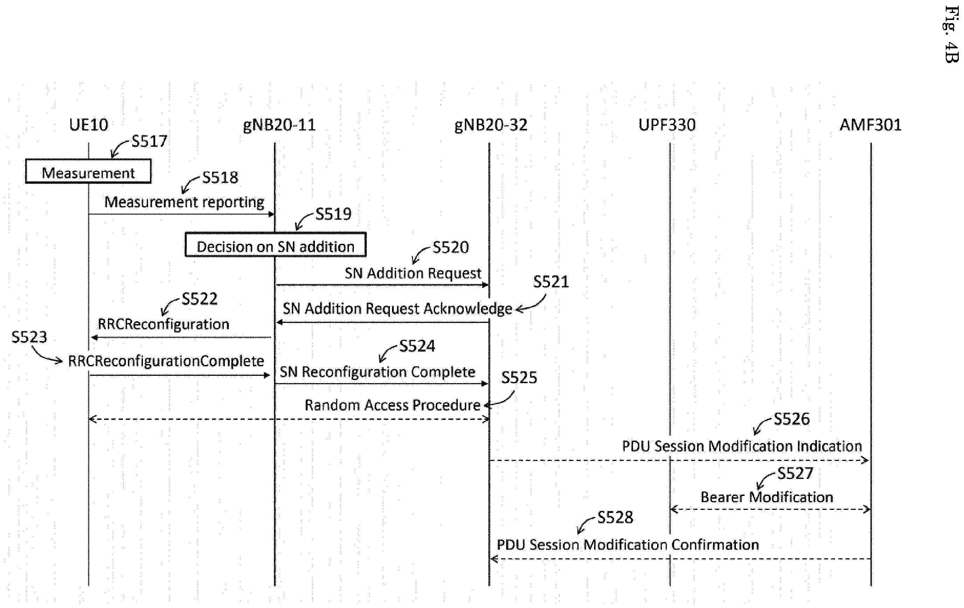

   Fig. 4B illustrates an example of a procedure subsequent to Fig. 4A.
[Fig. 5A]

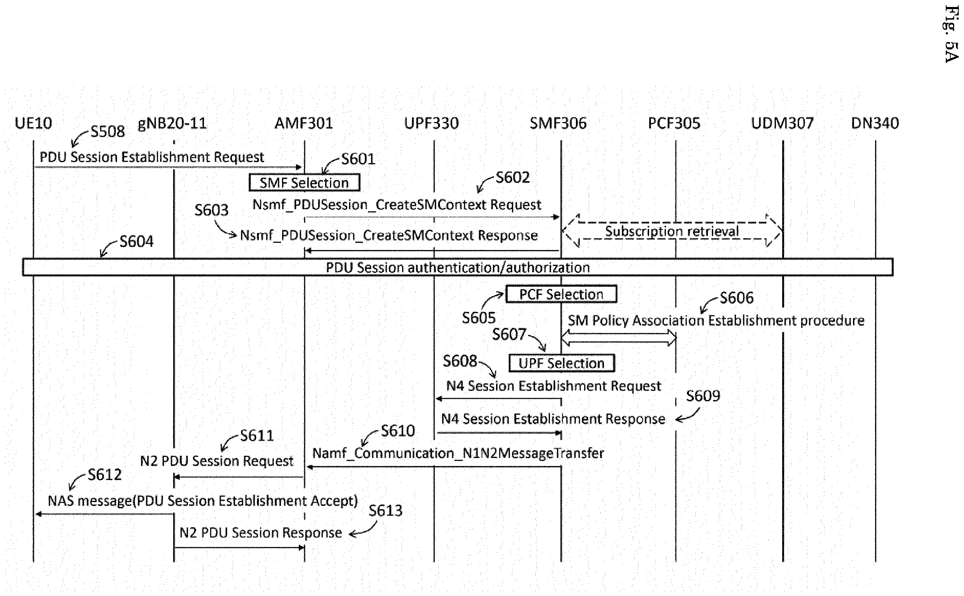

   Fig. 5A illustrates an example of PDU session establishment procedure in S509 that is started in response to a PDU session establishment request message.
[Fig. 5B]

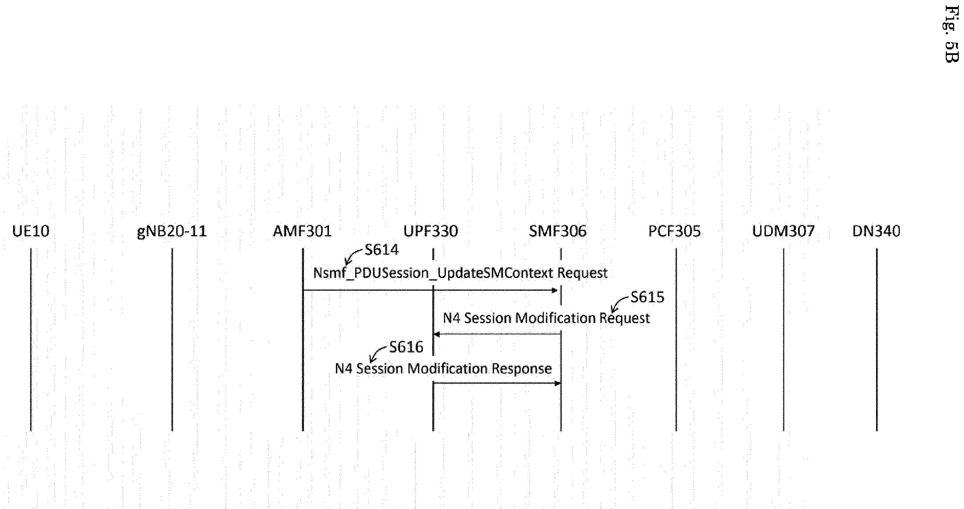

   Fig. 5B illustrates an example of a procedure subsequent to Fig. 5A.
[Fig. 6A]

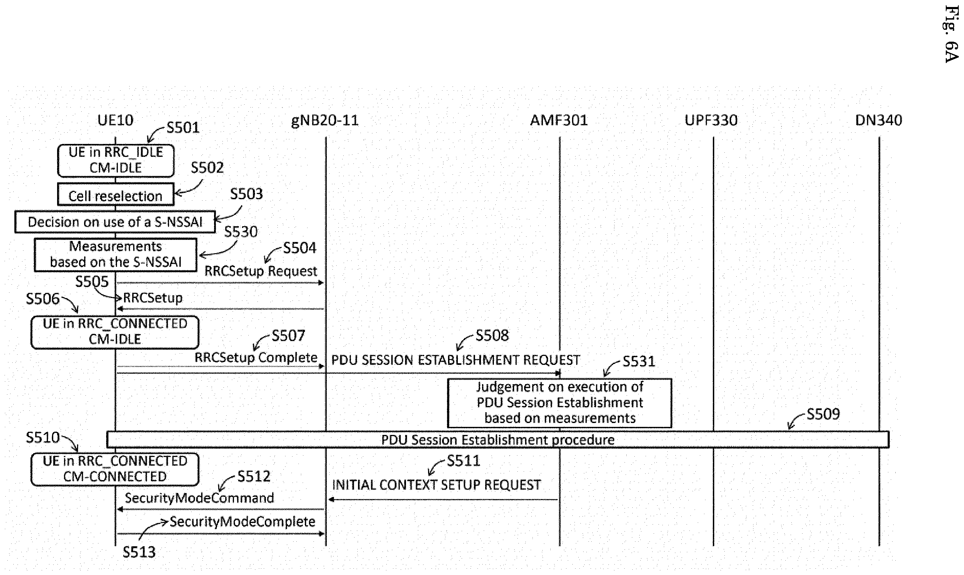

   Fig. 6A illustrates another example of a connection procedure for using S-NSSAI (eMBB_3).
[Fig. 6B]

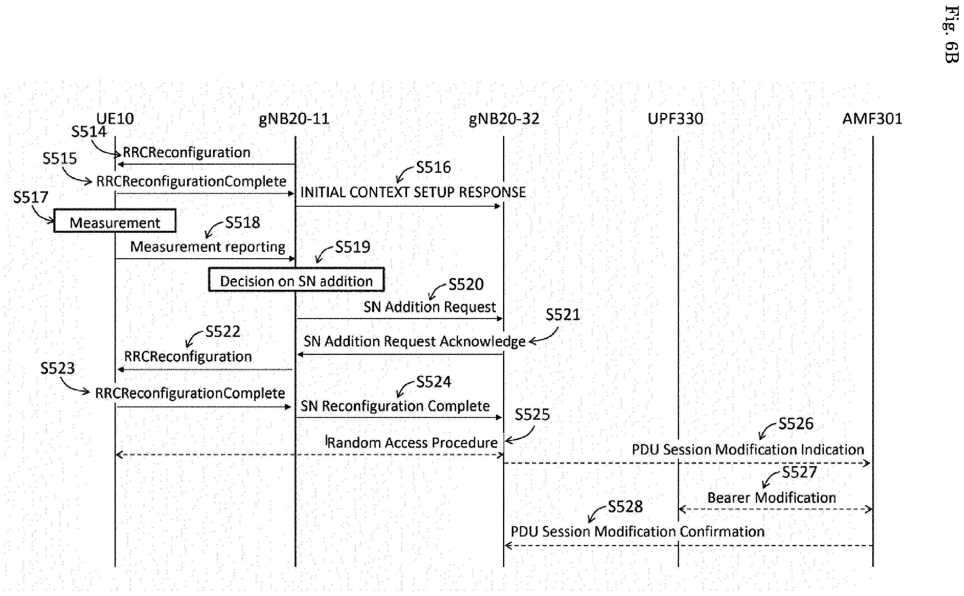

   Fig. 6B illustrates an example of a procedure subsequent to Fig. 6A.
[Fig. 7]

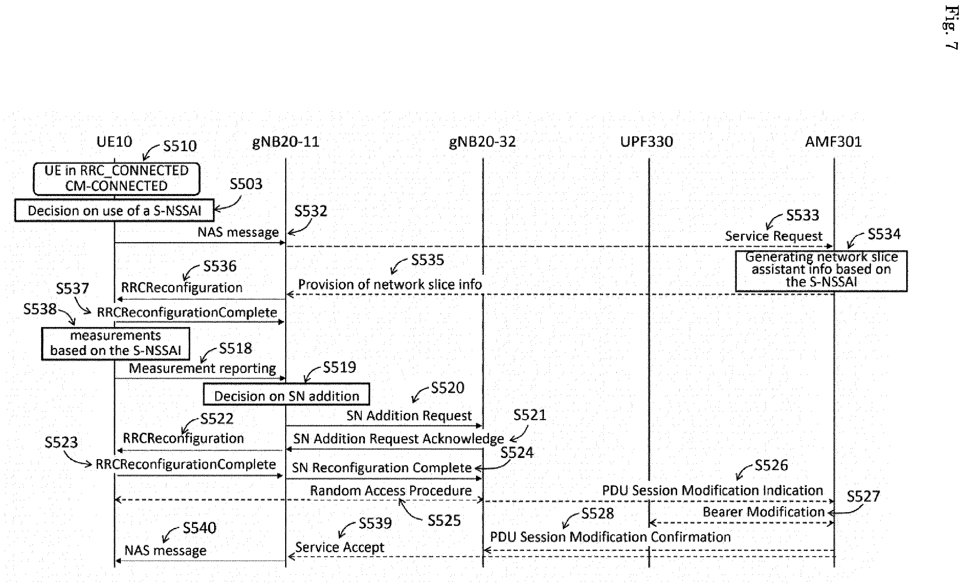

   Fig. 7 illustrates another example of a connection procedure for using S-NSSAI (eMBB_3).
[Fig. 8]

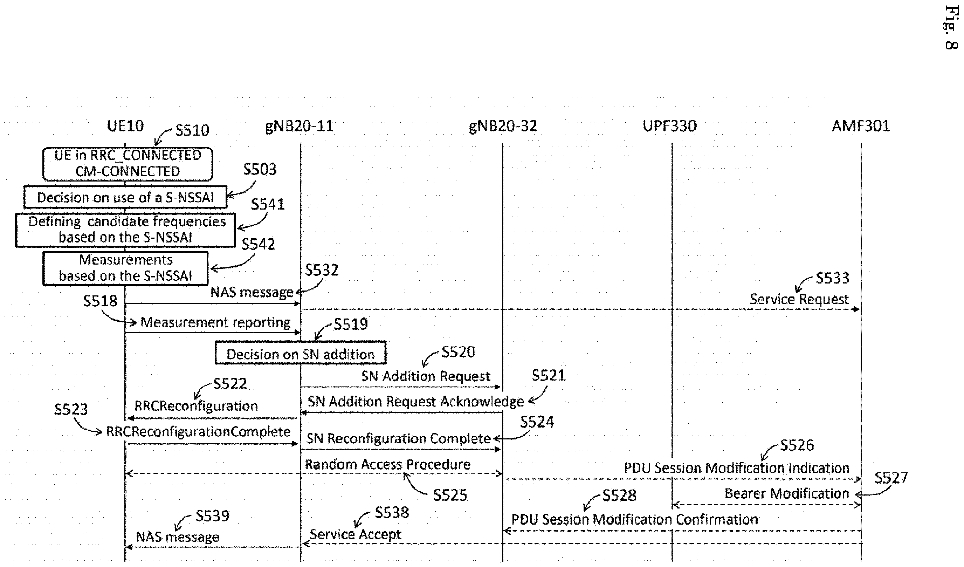

   Fig. 8 illustrates still another example of a connection procedure for using S-NSSAI (eMBB_3).
[Fig. 9]

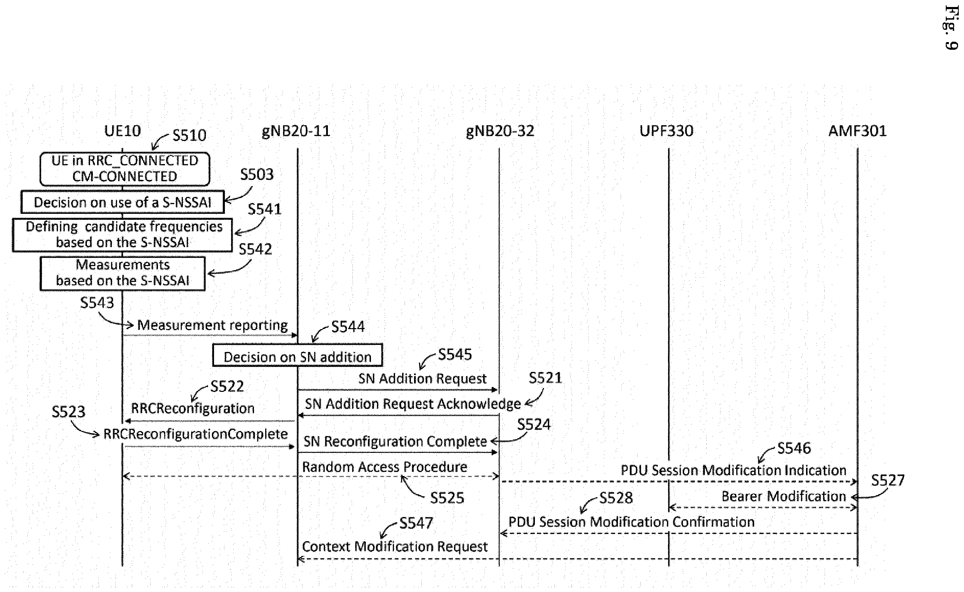

   Fig. 9 illustrates still another example of a connection procedure for using S-NSSAI (eMBB_3).
[Fig. 10]

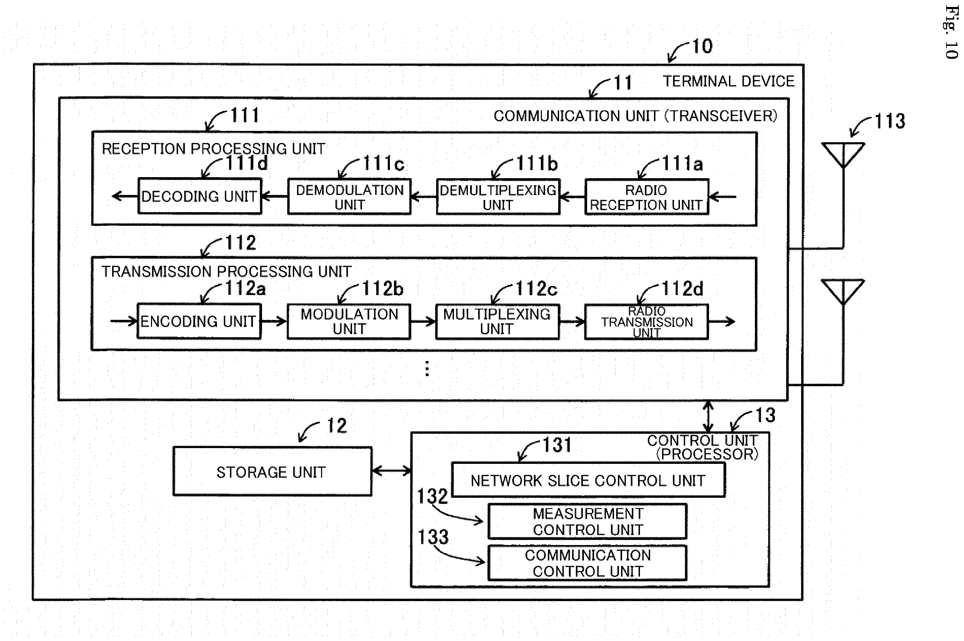

   Fig. 10 is a diagram illustrating an example of a configuration of a terminal device (UE 10) according to the present embodiment.
[Fig. 11]

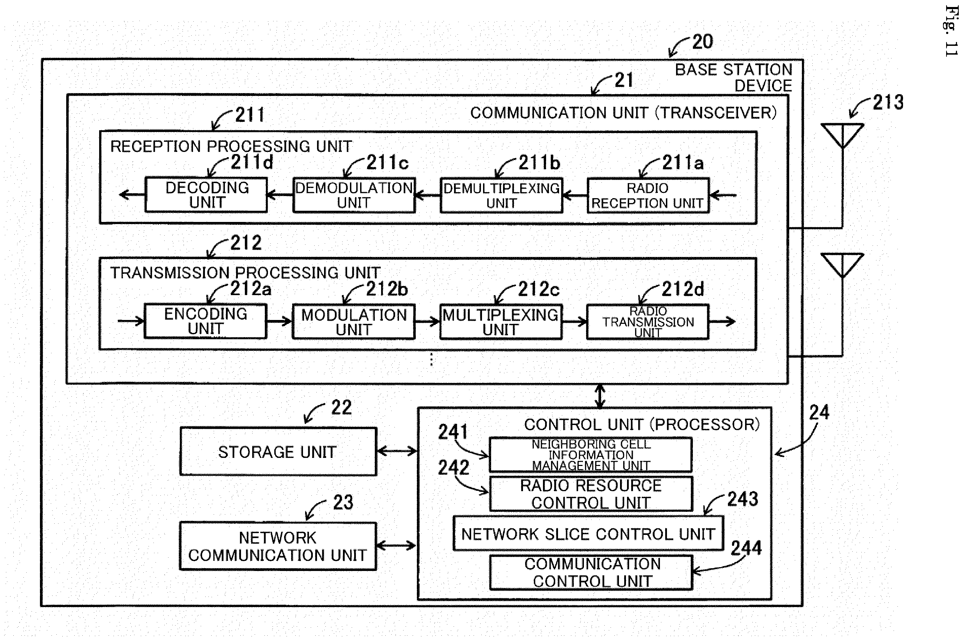

   Fig. 11 is a diagram illustrating an example of a configuration of a base station device ((R)AN 20) according to the present embodiment.
[Fig. 12]

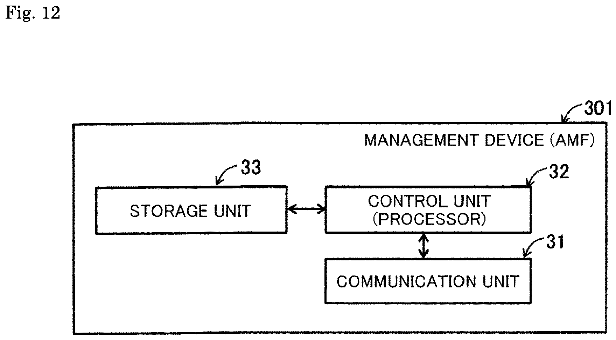

   Fig. 12 is a diagram illustrating an example of a configuration of a management device according to the present embodiment.
[Fig. 13]

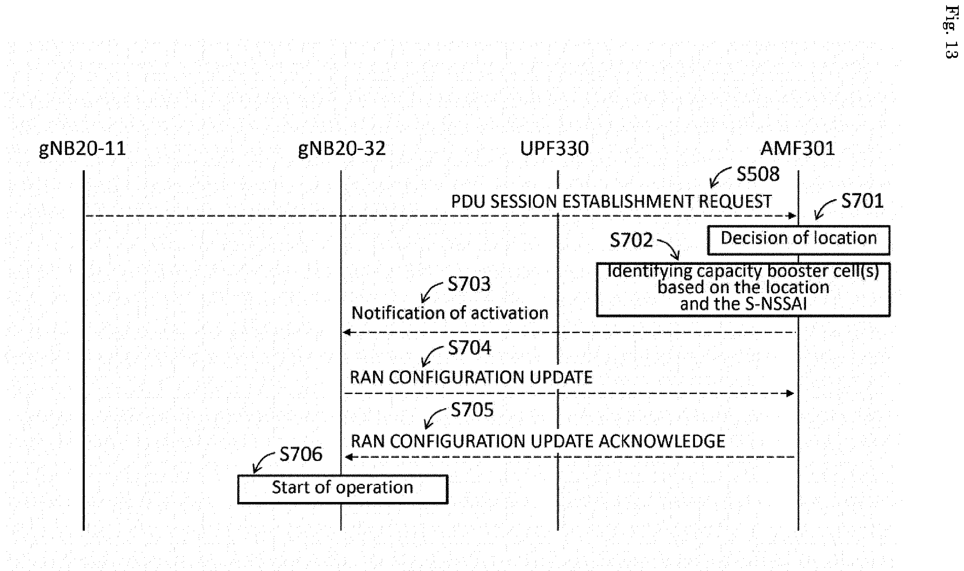

   Fig. 13 illustrates an example of control of a capacity boost cell.

### [Description of Embodiments]

Embodiments of the present invention will be described below with reference to the drawings. In one or more embodiments described in the present disclosure, the elements included in each embodiment can be combined with each other, and the combined result is also part of the embodiments described in the present disclosure.

Fig. 1 is a diagram illustrating a configuration of a 5G system (5GS) network architecture. The 5GS includes a user equipment (UE) 10, a radio access network/access network ((R)AN) 20, and a core network 30. As used herein, the core network 30 is also referred to as a 5G core (5GC) or an NG core (NGC).

A functional group of a control plane is made up of a plurality of network functions (NFs), including an access and mobility management function (AMF) 301, a network exposure function (NEF) 302, a network repository function (NRF) 303, a network slice selection function (NSSF) 304, a policy control function (PCF) 305, a session management function (SMF) 306, a unified data management (UDM) 307, an application function (AF) 308, an authentication server function (AUSF) 309, and a UE radio capability management function (UCMF) 310.

The UDM 307 includes a unified data repository (UDR) that stores and manages subscriber information, and a front end (FE) unit that processes the subscriber information. The AMF 301 performs mobility management. The SMF 306 performs session management. The UCMF 310 stores UE radio capability information corresponding to all UE radio capability IDs in a public land mobile network (PLMN). The UCMF 310 plays a role in assigning each PLMN-assigned UE radio capability ID.

Namf is a service-based interface provided by the AMF 301, Nsmf is a service-based interface provided by the SMF 306, Nnef is a service-based interface provided by the NEF 302, Npcf is a service-based interface provided by the PCF 305, Nudm is a service-based interface provided by the UDM 307, Naf is a service-based interface provided by the AF 308, Nnrf is a service-based interface provided by the NRF 303, Nnssf is a service-based interface provided by the NSSF 304, and Nausf is a service-based interface provided by the AUSF 309. Each NF exchanges information with other NFs via each service-based interface.

A user plane function (UPF) 330 has a function of user plane processing. A data network (DN) 340 has a function that enables connection to services unique to a mobile network operator (MNO), the Internet, and services of third parties.

The (R)AN 20 has a function that enables connection with a radio access network (RAN) and connection with an access network (AN) other than the RAN. The (R)AN 20 includes a base station device 20 called gNB or ng-eNB. The RAN is sometimes referred to as a next generation (NG)-RAN.

Information is mutually exchanged between the UE 10 and the AMF 301 via a reference point N1. Information is mutually exchanged between the (R)AN 20 and the AMF 301 via a reference point N2. Information is exchanged between the SMF 306 and the UPF 330 via a reference point N4.

The 5G QoS model supports both guaranteed flow bit rate (GBR) QoS flows and non-GBR QoS flows. GBR QoS flows correspond to QoS flows that require guaranteed flow bit rate, and non-GBR QoS corresponds to QoS flows that do not require guaranteed flow bit rate. At non-access stratum (NAS) level, different QoSs can be handled within a protocol data unit (PDU) session at the granularity of QoS flow. A QoS flow is encapsulated over an NG-U interface. The QoS flow is identified within a PDU session by a QoS flow ID (QFI) carried as a header.

For each UE 10, the (R)AN 20 can establish at least one radio bearer, a data radio bearer (DRB), together with a PDU session, and can further establish an additional DRB. The DRB is a logical path for transmitting data. The (R)AN 20 and the core network 30 assign a packet to QoS and a DRB, which are suitable for a service, to ensure the quality of the service. Specifically, two steps are performed: mapping of IP flows and QoS flows in a non-access stratum (NAS), and mapping of QoS flows and DRBs in an access stratum (AS).

At the non-access stratum (NAS) level, a QoS flow is characterized by QoS profile(s) provided from the core network 30 to the (R)AN 20 and QoS rule(s) provided from the core network 30 to the UE 10. The QoS profile(s) are used by the (R)AN 20 to decide how to process on a wireless interface. On the other hand, the QoS rule(s) are used to instruct the UE 10 to map uplink user plane traffic and QoS.

The QoS profile(s) are provided to the (R)AN 20 by the SMF 306 through the AMF 301 and the reference point N2, or is set in advance in the (R)AN 20.

The SMF 306 may provide one or more QoS rules through the AMF 301 and optionally QoS flow-level QoS parameters associated with the QoS rule(s) to the UE 10 via the reference point N1. In addition to this, or instead of this, the UE 10 can apply reflective QoS control. As used herein, the reflective QoS control is a QoS control that monitors the QFI(s) of downlink packets and applies the same mapping to the uplink.

The QoS flow may be of either GBR (guaranteed bit rate) or non-GBR (non-guaranteed bit rate) flow type depending on the QoS profile(s). The QoS profile(s) of the QoS flow include, for example, parameters such as a 5G QoS identifier (5QI) and an allocation and retention priority (ARP).

Here, the ARP includes information on priority level, pre-emption capability, and pre-emption vulnerability. The ARP priority level defines the relative importance of a QoS flow, and is set in the range of 1 to 15 with 1 for the highest importance. The ARP pre-emption capability is an indication that defines whether or not a QoS flow can use the resources already allocated to another QoS flow with a lower priority. The ARP pre-emption vulnerability is an indication that defines whether or not the resources allocated to a QoS flow are released to another QoS flow with a higher priority. Each of the ARP pre-emption capability and the ARP pre-emption vulnerability is required to be set to either "enabled" or "disabled".

For a GBR QoS flow, the QoS profile(s) include guaranteed flow bit rates (GFBRs) for uplink and downlink, maximum flow bit rates (MFBGs) for uplink and downlink, maximum packet loss rates for uplink and downlink, delay critical resource type, notification control, and others. For a non-GBR QoS flow, the QoS profile(s) include reflective QoS attribute (RQA), additional QoS flow information, and others.

The notification control, which is a QoS parameter, indicates whether or not the (R)AN 20 requires a notification when the GFBR cannot be fulfilled for a QoS flow. When the notification control is "enable" for a certain GBR QoS flow and the (R)AN 20 decides that the GFBR cannot be fulfilled, the (R)AN 20 is required to transmit a notification to the SMF 306. In this case, unless special conditions at the (R)AN 20 require the release of RAN resources for this GBR QoS flow, such as radio link failure or RAN internal congestion, the (R) AN 20 is required to maintain the QoS flow. When the (R)AN 20 determines that the GFBR can be fulfilled again, the (R)AN 20 transmits a new notification indicating that to the SMF 306.

In addition, an aggregate maximum bit rate (AMBR) is associated to Session-AMBR of each PDU session and UE-AMBR of each UE 10. The Session-AMBR limits the aggregate bit rate that is expected to be provided across all non-GBR QoS flows for a specific PDU session and is managed by a user plane function (UPF). The UE-AMBR limits the aggregate bit rate that is expected to be provided across all non-GBR QoS flows for a certain UE 10 and is managed by the (R)AN 20.

The 5QI is associated to QoS characteristics and provides guidelines (policies) for setting node-specific parameters for each QoS flow. Standardized or preset 5G QoS characteristics can be derived from the 5QI and are not explicitly signaled. Signaled QoS characteristics can be included as part of the QoS profiles. The QoS characteristics consist of elements such as priority level, packet delay budget, packet error rate, averaging window, and maximum data burst volume. The packet delay budget may include a packet delay budget for the core network 30.

At the access stratum (AS) level, the DRB (radio bearer) defines how to process packets on an air interface (Uu interface). Any DRB provides the same packet forwarding for packets. The (R)AN 20 allocates (maps) a QoS flow to the DRB based on a QoS flow ID (QFI) and associated QoS profiles. Another DRB may be established for packets that require different packet forwarding. Alternatively, a plurality of QoS flows belonging to the same PDU session can be multiplexed in the same DRB.

In the uplink, the mapping of QoS flows to DRBs is controlled by mapping rules that are signaled in two different ways. One is a method called reflective mapping, in which for each DRB, the UE 10 monitors the QFI(s) in the downlink packets and applies the same mapping to the uplink. The other is a method called explicit configuration, in which the mapping rules for QoS flows to DRBs are explicitly signaled by radio resource control (RRC).

In the downlink, the QoS flow ID (QFIs) are signaled by the (R)AN 20 on the Uu interface for reflective quality of service (RQoS), but unless both the (R)AN 20 and the non-access stratum (NAS) use the reflective mapping for a QoS flow carried by a certain DRB, the QFI for that DRB is not signaled on the Uu interface. In the uplink, the (R)AN 20 may be configured to perform signaling of the QFI on the Uu interface to the UE 10.

In 5G NR, a new service data adaptation protocol (SDAP) sublayer is introduced for QoS control through QoS flows. The SDAP sublayer maps the traffic of QoS flows to appropriate DRBs. The SDAP sublayer can have a plurality of SDAP entities, one for each PDU session on the Uu interface. Establishment or release of the SDAP entity is performed by radio resource control (RRC). QoS flows are identified using the QFI in the PDU session container included in the GTP-U header. A PDU session is identified using a GTP-U tunnel endpoint identifier (TEID). The SDAP sublayer maps each QoS flow to a specific DRB.

[1. S-NSSAI (Single Network Slice Selection Assistance Information)] A network slice is a unit of service in which the communication services provided by 5G are divided according to the communication characteristics required for each service (e.g. data rate, delay, etc.). S-NSSAI is allocated to each network slice as information for assisting network slice selection (network slice selection assistance information). This S-NSSAI is composed of a set of a mandatory slice/service type (SST) consisting of 8 bits for identifying a slice type, and an optional slice differentiator (SD) consisting of 24 bits for distinguishing between different slices within the same SST.

Network slice setting information includes one or more configured NSSAIs. Serving public land mobile network (serving PLMN) can set configured NSSAI applied to each PLMN for a UE. Alternatively, the home PLMN (HPLMN) can set default configured NSSAI for a UE. Only when the configured NSSAI for the serving PLMN is not set for the UE 10, the UE 10 under the serving PLMN can use the default configured NSSAI. Default configured NSSAI may be set in advance for the UE 10. The UDM 307 on the HPLMN may provide or update the default configured NSSAI using UE parameters update through a UDM control plane procedure. The configured NSSAI is composed of one or more S-NSSAIs.

Requested NSSAI is NSSAI provided from the UE 10 to the serving PLMN in the registration procedure. The requested NSSAI is required to be one of the following:
- Default configured NSSAI
- Configured-NSSAI
- Allowed-NSSAI or part thereof
- NSSAI in which one or more S-NSSAIs included in configured-NSSAI is added to allowed-NSSAI or part thereof

The allowed-NSSAI is, for example, NSSAI provided by the serving PLMN to the UE 10 in the registration procedure, and indicates values of one or more S-NSSAIs that are available within the current registration area of the current serving PLMN.

Subscribed S-NSSAI is S-NSSAI that is available for the UE 10 within the PLMN in accordance with contract information.

### [2. Network Slice Deployment Scenario]

5G is expected to adopt the concept of network slicing, in which it is possible to provide various services with different communication requirements in a communication mode suitable for each service.

Fig. 2 is a diagram illustrating an example of a network slice deployment scenario. For example, it is possible to support not only relatively low throughput services (eMBB_1) but also high throughput services (eMBB_3) among enhanced mobile broadband (eMBB) services, which are high-speed, large-capacity services.

A service called eMBB can be identified by a slice/service type (SST), and eMBB_1, eMBB_2, or eMBB_3 among eMBB services can be identified by a slice differentiator (SD).

The low throughput services (eMBB_1) can also support the 700 MHz to 900 MHz frequency band called the platinum band and the 2 GHz frequency band used in 3G and onwards. The higher throughput services (eMBB_3) require to support millimeter-wave frequencies, which can utilize a wide frequency band. Since the millimeter-wave band has a high straight advancing property and a large propagation loss, the cell coverage is smaller than the 700 MHz to 900 MHz frequency band and the 2 GHz frequency band.

Thus, for example, a development scenario is possible in which basic coverage cells (gNB 20-11, gNB 20-12, gNB 20-13) that operate in the 700 MHz to 900 MHz frequency band or the 2 GHz frequency band support eMBB_1, capacity boost cells (gNB 20-21, gNB 20-22, ..., gNB 20-26) that operate in the 3.6 GHz to 6 GHz frequency band called sub-6G, support eMBB_2, and capacity boost cells (gNB 20-31, gNB 20-32, ..., gNB 20-42) that operate in the millimeter-wave frequency band including the 28 GHz band support eMBB_3. Here, the concept of cell may also be a coverage provided by one or more beams. This set of one or more beams can substitute for a cell. Each beam is identified for each SS/PBCH block. In other words, the concept of cell may include a set of SS/PBCH blocks.

Seamless, two-dimensional deployment of capacity boost cells, which operate in the millimeter-wave frequency band, without any gaps is difficult from an investment cost perspective, which will result in providing hotspot-like services. Assuming that the area illustrated in Fig. 2 is one registration area (RA) as a whole, if the allowed NSSAI includes eMBB_1, eMBB_2, and eMBB_3, the UE 10 determines that eMBB_1, eMBB_2, and eMBB_3 are available within this registration area.

Here, each capacity boost cell (gNB 20-31, gNB 20-32, ..., gNB 20-42) may be configured together with a central unit (CU) included in a base station that provides a basic coverage cell (gNB 20-11, gNB 20-12, gNB 20-13). In other words, each capacity boost cell is configured by a distributed unit (DU), which is a component of the base station. The CU and the DU are connected by an F1 interface. Each capacity boost cell may be configured with a CU and a DU, which are included in a base station that provides a basic coverage cell. In other words, each capacity boost cell is configured by a radio unit (RU), which is a component of the base station. The DU and The RU are connected via a fronthaul. Here, the fronthaul is, for example, a fronthaul compliant with evolved Common Public Radio Interface (eCPRI).

### [3. Registration Procedure]

In order to receive services through the 5GC/NGC 30, the UE 10 is required to register with a network (RAN, AN, core network, etc.) for any purpose of: initial registration with the 5GS, mobility registration update due to change in tracking area (TA), periodic registration update, and emergency registration. The UE 10 selects, for example, a PLMN corresponding to the 5GC/NGC 30 and executes a registration procedure.

Fig. 3 illustrates an example of the registration procedure. As illustrated in Fig. 3, the UE 10 in RM-Deregistered state, that is, in an unregistered state with the 5GC/NGC 30, transmits a registration request message to the RAN/AN 20 to execute initial registration (step S401). At this time, the UE 10 transmits the registration request message including a UE identity.

If it has a valid EPS global unique temporary identifier (GUTI), the UE identity is a 5G-GUTI mapped from the EPS GUTI. Here, an evolved packet system (EPS) refers to a 4G system that supports long term evolution (LTE), and is composed of evolved UMTS terrestrial radio access network (EUTRAN) and evolved packet core (EPC). From a security perspective, the EPS GUTI is a temporary ID used to identify the UE 10 within the EPS, instead of an ID uniquely assigned to each UE such as an international mobile subscriber identity (IMSI) or an international mobile equipment identity (IMEI). Alternatively, the UE identity is a PLMN-specific 5G-GUTI assigned by the PLMN with which the UE 10 is attempting to register, if available.

Alternatively, the UE identity is a PLMN-specific 5G-GUTI assigned by a PLMM that is treated as an equivalent PLMN to the PLMN with which the UE 10 is attempting to register, if available.

Alternatively, the UE identity is a PLMN-specific 5G-GUTI assigned by any PLMN, if available.

Otherwise, the UE 10 includes a subscription concealed identifier (SUCI) in the registration request message. Here, the SUCI is an ID in which a subscription permanent identifier (SUPI), which is an ID uniquely assigned to each UE 10, is encrypted.

When the UE 10 registers with the 5GS of a PLMN, if the UE 10 has a configured NSSAI or an allowed NSSAI for this PLMN, the UE 10 is required to provide the above-described requested NSSAI to the network. Therefore, the UE 10 includes the requested NSSAI in the registration request message, or includes in the registration request message the mapping between the S-NSSAIs of the requested NSSAI and the S-NSSAIs of the HPLMN. This allows the network side to confirm whether or not the S-NSSAI(s) included in the requested NSSAI can be allowed on the basis of the subscribed S-NSSAIs.

If the UE 10 uses the default configured NSSAI, the UE 10 includes a default configured NSSAI indication in the registration request message.

When the RAN/AN 20 receives the registration request message from the UE 10, the RAN/AN 20 executes AMF selection (step S402). If the registration request message does not include a 5G S-temporary mobile subscription identifier (5G-S-TMSI) or a globally unique AMF identifier (GUAMI), the RAN/AN 20 selects an AMF 301 based on radio access technology ((R)AT) and if available, the requested NSSAI. Alternatively, if the 5G-S-TMSI or the GUAMI included in the registration request message does not indicate a valid AMF 301, the RAN/AN 20 selects an AMF 301 based on radio access technology ((R)AT) and if available, the requested NSSAI.

If the RAN/AN 20 is an NG-RAN, the RAN/AN 20 forwards to the AMF 209 a registration request including the selected PLMN ID or a registration request including a set of a PLMN ID and a network identifier (NID) for identifying a standalone non-public network (SNPN) (step S403).

If the UE 10 does not provide the SUCI to the AMF 301, the AMF 301 starts an identity request procedure and transmits an identity request message to the UE 10 to request the SUCI (step S404).

When the UE 10 receives the identity request message in step S404, the UE 10 transmits an identity response message including the SUCI (step S405). Here, the UE 10 can acquire the SUCI using a public key for the HPLMN.

The AMF 301 executes AUSF selection based on the SUPI or the SUCI (step S406) to start authentication of the UE 10.

When the AUSF 309 receives an authentication request from the AMF 301, the AUSF 309 is required to execute authentication of the UE 10.

For an authentication procedure, the AUSF 309 selects a UDM 307 and acquires authentication data from the UDM 307.

If the UE 10 is authenticated, the AUSF 309 provides information on security to the AMF 301.

If the authentication of the UE 10 is successful, the AMF 301 starts an NG application protocol (NGAP) procedure and provides a security context to the RAN/AN 23.

The RAN/AN 20 stores the security context and transmits a response to the AMF 301.

From now on, the RAN/AN 20 uses this security context to protect messages exchanged with the UE 10.

The AMF 301 executes UDM selection based on the SUPI to select the UDM 307 (step S407).

The AMF 301 is registered in the UDM 307 using Nudm_UECM_Registration (step S408).

If the AMF 301 does not have the subscriber information (subscription data) of the UE 10, the AMF 301 uses Nudm_SDM_Get (step S409) to acquire from the UDM 307 subscription data such as access and mobility subscription data, and SMF selection subscription data (step S410).

After the AMF 301 acquires the access and mobility subscription data from the UDM 307, the AMF 301 creates a UE context. The access and mobility subscription data includes information indicating whether or not NSSAI may be included in plain text in RRC connection establishment for 3GPP access.

The AMF 301 transmits a registration accept message to the UE 10 (step S411). The registration accept message includes 5G-GUTI and registration area. An N2 message including the registration accept message includes allowed NSSAI.

The allowed NSSAI includes only one of the following:
- S-NSSAI(s) that do not require network slice-specific authentication and authorization based on subscriber information
- S-NSSAI(s) for which network slice-specific authentication and authorization are successful based on the UE context of the AMF 301

The AMF 301 may provide a list of equivalent PLMNs to the UE 10 to be registered in the PLMN, but the AMF 301 is not allowed to provide a list of equivalent PLMNs to the UE 10 to be registered in the SNPN.

The UE 10 transmits a registration complete message to the AMF 301 to notify that a new 5G-GUTI has been assigned (step S412).

According to the above-described registration procedure, the UE 10 enters a registered state with respect to the 5GC/NGC 30, that is, a registration management (RM)-Registered state.

### [4. Cell Selection/Reselection Procedure]

A cell selection procedure is required to transition from RM-Deregistered to RM-Registered, from connection management (CM)-Idle to CM-Connected, and from CM-Connected to CM-Idle.

The non-access stratum (NAS) layer of the UE 10 specifies the selected PLMN and the equivalent PLMN(s). Subsequently, the UE 10 searches NR frequency bands to specify the cell with the highest reception strength for each cell-defining synchronization signal/PBCH block (SSB) (CD-SSB) arranged in a synchronization raster for each carrier frequency. Here, the synchronization raster indicates the frequency position of a synchronization block. The UE 10 reads the cell system information to identify the PLMN of the identified cell. The UE 10 may search the carrier frequencies in order, or may executes search using stored information to reduce the search time (stored information cell selection).

The UE 10 attempts to identify a suitable cell, but if it cannot identify a suitable cell, the UE 10 attempts to identify an acceptable cell. Only when a suitable or acceptable cell is found, the UE 10 camps on that cell and starts a cell reselection procedure.

Here, the appropriate cell is one of the measured cells that fulfills cell selection criteria or a threshold value, and the PLMN of that cell is the selected PLMN, the registered PLMN, or the equivalent PLMN. The cell is not a cell to which access is prohibited and that is not reserved, and is also a cell that is not part of a tracking area included in a list of tracking areas for which roaming is prohibited.

The acceptable cell is one of the measured cells that fulfills cell selection criteria, and is not a cell to which access is prohibited.

The UE 10 in RRC_IDLE executes a cell reselection procedure to identify a cell to camp on. As with the cell selection procedure, the cell reselection procedure is performed on the basis of each CD-SSB arranged in synchronization raster, and the UE 10 measures the quality of the serving cell and neighboring cells for reselection. Intra-frequency reselection, which is a reselection procedure of a cell with the same frequency, is performed on the basis of cell ranking. Inter-frequency reselection, which is a reselection procedure of a cell with a different frequency, is performed on the basis of priority, and the UE 10 camps on a cell with the highest priority of possible cells. Here, only carrier frequencies are notified to search for and measure neighboring cells with different frequencies, and absolute priority among different frequencies is provided to the UE 10 using system information or an RRC release message. The serving cell can provide a neighboring cell list (NCL) to handle special cases for neighboring cells with the same frequency or different frequencies. A forbidden list may be provided to prevent the UE 10 from reselecting a specific neighboring cell with the same frequency or with a different frequency. An allow list may be provided to allow the UE to reselect only a specific neighboring cell with the same frequency or with a different frequency. The cell reselection may depend on movement speed. A service-specific priority may be added.

### [5. Cell Selection/Reselection Procedure based on Network Slice]

One of the important procedures for the UE 10 in RRC_IDLE mode is receiving paging. Therefore, it is important that the UE 10 in RRC_IDLE mode does not lose coverage. It is also important for the UE 10 in RRC_IDLE mode to reduce power consumption in the cell reselection procedure. Referring to the example of the network slice deployment scenario illustrated in Fig. 2, in order to reduce power consumption in the cell reselection procedure and not lose coverage, it may be efficient for the UE 10 to monitor basic coverage cells that support eMBB_1.

Thus, in the above-described registration procedure, the network can notify the UE 10 of not only the allowed NSSAI but also S-NSSAI as default (default S-NSSAI) from among one or more S-NSSAIs included in the allowed NSSAI, for example, the S-NSSAI corresponding to eMBB_1, to execute a reselection procedure of a basic coverage cell. The UE 10 in RRC_IDLE mode executes the cell reselection procedure based on the default S-NSSAI.

The network may set this default S-NSSAI for each slice/service type (SST). For example, the default S-NSSAI for eMBB is set to eMBB_1 from among eMBB_1, eMBB_2, and eMBB_3. Further, the default S-NSSAI for URLLC is set to URLLC_1 from among URLLC_1, URLLC_2, and URLLC _3. Furthermore, the default S-NSSAI for mMTC is set to mMTC_1 from among mMTC_1, mMTC_2, and mMTC_3. In addition, the default S-NSSAI for V2X is set to V2X_1 from among V2X_1, V2X_2, and V2X_3.

If the UE 10 in RRC_IDLE mode is scheduled to use any eMBB service, the UE 10 executes a cell reselection procedure based on the default S-NSSAI for eMBB. If the UE 10 in RRC_IDLE mode is scheduled to use any URLLC service, the UE 10 executes a cell reselection procedure based on the default S-NSSAI for URLLC. If the UE 10 in RRC_IDLE mode is scheduled to use any mMTC service, the UE 10 executes a cell reselection procedure based on the default S-NSSAI for mMTC. If the UE 10 in RRC_IDLE mode is scheduled to use any vehicle-to-everything (V2X) service, the UE 10 performs a cell reselection procedure based on the default S-NSSAI for V2X.

Instead of setting the default S-NSSAI, or in addition to setting the default S-NSSAI, the network may give relative priority to one or more S-NSSAIs included in the allowed NSSAI. For example, the network may give the highest priority to the S-NSSAI corresponding to eMBB_1 and cause the UE 10 to execute the reselection procedure of a basic coverage cell.

The network may set this priority for each slice/service type (SST). For example, high, medium, and low, or 1, 2, and 3 priorities are set for eMBB_1, eMBB_2, and eMBB_3, respectively; high, medium, and low, or 1, 2, and 3 priorities are set for URLLC_1, URLLC_2, and URLLC_3, respectively; high, medium, and low, or 1, 2, and 3 priorities are set for mMTC_1, mMTC_2, and mMTC_3, respectively; and high, medium, and low, or 1, 2, and 3 priorities are set for V2X_1, V2X_2, and V2X_3, respectively. If the UE 10 in RRC_IDLE mode is scheduled to use any eMBB service, the UE 10 executes a cell reselection procedure for eMBB_1 given the highest priority based on the priorities for eMBB; if the UE 10 in RRC_IDLE mode is scheduled to use any URLLC service, the UE 10 executes a cell reselection procedure for URLLC_1 given the highest priority based on the priorities for URLLC; if the UE 10 in RRC_IDLE mode is scheduled to use any mMTC service, the UE 10 executes a cell reselection procedure for mMTC_1 given the highest priority based on the priorities for mMTC; and if the UE 10 in RRC_IDLE mode is scheduled to use any V2X service, the UE 10 executes a cell reselection procedure for V2X_1 given the highest priority based on the priorities for V2X. Here, the UE 10 may treat the S-NSSAI given the highest priority as the default S-NSSAI.

Alternatively, the network may classify one or more S-NSSAIs included in the allowed NSSAI into one or more groups, and set default S-NSSAI or give priority for each group. The network notifies the UE 10 of not only the allowed NSSAI but also this group information, the default S-NSSAI for each group, or the priority information for each group. The example of setting the default S-NSSAI or giving priority for each SST as described above is one example of an embodiment in which default S-NSSAI is set or priority is given for each group.

[6. Connection Procedure 1 For Using Network Slice From RRC_IDLE Mode] Fig. 4A illustrates an example of a connection procedure for using S-NSSAI (eMBB_3). Fig. 4B illustrates an example of a procedure subsequent to Fig. 4A. As described above, it is assumed that the UE 10 in RRC_IDLE and CM-IDLE state (S501) performs a cell reselection procedure of a basic coverage cell (gNB 20-11, gNB 20-12, gNB 20-13) based on the default S-NSSAI, for example, and the UE 10 camps on gNB 20-11, for example (S502). Here, when the UE 10 decides to use S-NSSAI (eMBB_3) (S503), the UE 10 transmits an RRCSetup request message to the camped-on gNB 20-11 (S504).

When the UE 10 receives an RRCSetup message from the gNB 20-11 (S505), the UE 10 transitions to RRC_CONNECTED and CM-IDLE state (S506), and responds with an RRCSetup complete message to the gNB 20-11 to complete the RRC settings (S507).

When the UE 10 transmits a protocol data unit (PDU) session establishment request message, which is a NAS message, to the AMF 301 (S508), a PDU session establishment procedure is executed between the UE 10 and the DN 340 through the gNB 20-11 and the UPF 330 (S509). The UE 10 enters RRC_CONNECTED and CM-CONNECTED state (S510).

The AMF 310 creates UE context data including PDU session context, security key, UE radio capability, UE security capabilities, and others. The AMF 310 transmits the UE context data to the gNB 20-11 using an initial context setup request message (S511), and the gNB 20-11 sets the UE context for the UE 10. This initial context setup request message includes the allowed NSSAI and may further include S-NSSAI for each PDU session.

The gNB 20-11 transmits a SecurityModeCommand message to the UE 10 (S512), and uses this message to notify the UE 10 of the selected integrity algorithm. The UE 10 confirms the validity of the received message by verifying the integrity of the message, and responds with a SecurityModeComplete message (S513).

The gNB 20-11 transmits an RRCReconfiguration message to the UE 10 to configure a signaling radio bearer (SRB) 2 and a data radio bearer (DRB) (S514). When the gNB 20-11 receives an RRCReconfigurationComplete message from the UE 10 (S515), the SRB 2 and the DRB are established between the UE 10 and the gNB 20-11. The gNB 20-11 uses the RRCReconfiguration message to set a measurement to be executed by the UE 10 in RRC_CONNECTED mode, that is, transmits measurement setting information to the UE 10. The measurement setting information includes at least one of: information for performing a measurement (first measurement) of one or more frequencies used for a network slice that has been decided to be used among one or more network slices, and information for performing a measurement (second measurement) for selecting or reselecting a cell to camp on, or for selecting a cell to be a handover target.

Here, the types of measurements that the network can set for the UE 10 include NR measurement, Inter-RAT measurement of evolved universal mobile telecommunications system (UMTS) terrestrial radio access (E-UTRA) frequency, and inter-RAT measurement of UTRA-frequency division duplex (FDD) frequency.

Measurement information based on synchronization signal (SS)/physical broadcast channel (PBCH) blocks that the network can set to report to the UE 10 includes a measurement result for each SS/PBCH block, a measurement result for each cell based on SS/PBCH blocks, and an index value of the SS/PBCH block.

Measurement information based on channel state information reference signal (CSI-RS) that the network can set to report to the UE 10 includes a measurement result for each CSI-RS resource, a measurement result for each cell based on CSI-RS resources, and an index value of the measurement result for each CSI-RS resource.

Parameters for a measurement to be set include measurement objects, reporting configurations, measurement identities, quantity configurations, and measurement gaps.

The measurement objects indicate frequency/time locations for inter-frequency measurements and intra-frequency measurements, and subcarrier spacing of reference signals. A measurement object for inter-RAT E-UTRA measurement is an E-UTRA carrier frequency. A measurement object for inter-RAT E-UTRA-FDD measurement is a set of E-UTRA-FDD carrier frequency cells.

As the reporting configurations, one or more reports are set for each measurement object. As reporting criterion, an indication that triggers the transmission of a measurement report by the UE 10 is set. This indication indicates each periodic or triggered event. As RS type, a reference signal used by the UE to measure beams and cells, that is, SS/PBCH or CSI-RS is set. Reporting format includes types of measurement values for each cell and each beam that the UE includes in the measurement report, such as reference signal received power (RSRP), and related information such as the maximum number of cells and the maximum number of beams for each cell to be reported.

The measurement identities include a list of measurement identities for measurement reports, in which one measurement object is associated with one reporting configuration in each measurement identity.

The quantity configurations define settings for filtering for measurements, used for all event evaluations and related reports, as well as periodic reports.

The measurement gaps are used to set a period for which the UE 10 executes a measurement.

The gNB 20-11 transmits an initial context setup response message to the AMF 301 to notify that the procedure of setting the UE context has been completed (S516).

In step S514, the gNB 20-11 performs, for the UE 10, setting for measurements of the gNB 20-31 to the gNB 20-42 based on the S-NSSAI (eMBB_3) of the PDU session included in a nitial context setup request message. Here, the settings for measurements include: measurement objects including carrier frequencies of the gNB 20-31 to the gNB 20-42 as candidate frequencies for a secondary cell group (SCG) or a secondary cell (SCell); and reporting configurations including indications for triggering the transmission of the measurement report of measurement results of SCG or SCell.

In addition to measuring the carrier frequencies of the gNB 20-11 to the gNB 20-13, which are basic coverage cells, the UE 10 measures candidate frequencies for the SCG or SCell using the measurement gaps (S517).

Here, the gNB 20-11 may decide on the basis of the frequency band classification whether it is set to a candidate frequency for basic coverage cell measurement or it is set to a candidate frequency for the SCG or SCell that operates as a capacity boost cell. For example, the frequency band is classified into FR1 (410 MHz to 7125 MHz) or FR2 (24250 MHz to 52600 MHz), the carrier frequencies included in FR1 are set as candidate frequencies for basic coverage cell measurement, and the carrier frequencies included in FR2 are set as candidate frequencies for the SCG or SCell. This frequency band classification may be set for each network slice, for example, for each slice/service type (SST). Furthermore, the gNB 20-11 may set lower carrier frequencies included in FR1 as candidate frequencies for basic coverage cell measurement, and set the other carrier frequencies included in FR1 as candidate frequencies for the SCG or SCell.

When the measurement results of the SCG or SCell, for example, the measurement result of the gNB 20-32, fulfills criteria or a threshold value, the UE 10 transmits a measurement report to the gNB 20-11 (S518). The gNB 20-11, which is a master node (MN), decides to execute a secondary node (SN) addition based on the received measurement report (S519), and transmits an SN addition request message to the gNB 20-32 (S520).

When the gNB 20-32 receives the SN addition request, the gNB 20-32 transmits an SN addition request acknowledgment message to the gNB 20-11 (S521). When receiving the SN addition request acknowledgment message, the gNB 20-11 transmits to the UE 10 an RRCReconfiguration message that instructs the SN addition (S522). When the settings necessary for the SN addition are completed, the UE 10 transmits an RRCReconfigurationComplete message to the gNB 20-11 (S523). The gNB 20-11 forwards an SN reconfiguration complete message to the gNB 20-32 to notify that the UE 10 has completed the settings necessary for the SN addition (S524).

When the UE 10 executes a random access procedure for the gNB 20-32, which is an SN (S525), the gNB 20-32 notifies the AMF 301 of a PDU session modification indication (S526). The AMF 301 performs procedures necessary to change the bearer with the UPF 330 (S527), transmits a PDU session modification confirmation to the gNB 20-32 (S528), and accordingly, completes the procedure of changing the PDU session established between the UE 10 and the DN 340. When this procedure of changing the PDU session including the gNB 20-32 is completed, the services of eMBB_3 through the gNB 20-32 become available.

Fig. 5A illustrates an example of the PDU session establishment procedure in step S509 of Fig. 4A that is started in response to the PDU session establishment request message. Fig. 5B illustrates an example of a procedure subsequent to Fig. 5A.

When the AMF 301 receives the PDU session establishment request message transmitted from the UE 10 (S508), the AMF 301 executes SMF selection (S601). Here, the PDU session establishment request message includes the S-NSSAI (eMBB_3) corresponding to the requested service (eMBB_3) in the allowed NSSAI, and UE requested data NetworkName (DNN). If the PDU session establishment request message includes the S-NSSAI (eMBB_3) but does not include DNN, a default DNN for this S-NSSAI (eMBB_3) is selected as DNN.

The AMF 301 transmits an Nsmf _PDUSession_CreateSMContext request including the S-NSSAI (eMBB_3) to the selected SMF 306 (S602). Here, the Nsmf_PDUSession_CreateSMContext request includes the SUPI, the S-NSSAI (eMBB_3), the UE requested DNN, or DNN.

If the SUPI and session management subscription data corresponding to the DNN and the S-NSSAI (eMBB_3) are not available, the SMF 306 uses Nudm_SDM_Get to acquire the session management subscription data from the UDM 307. The SMF 306 uses Nudm_SDM_Subscribe to register so as to be notified when the session management subscription data is updated.

When receiving the Nsmf_PDUSession_CreateSMContext request, the SMF 306 creates an SM context if it can process the PDU session establishment request. Then, the SMF 306 provides an SM context ID to the AMF 301 by transmitting an Nsmf_PDUSession_CreateSMContext response (S603).

If it is necessary to execute the second authentication/authorization procedure by a DN-AAA server during the establishment of a PDU session, the SMF 306 starts a PDU session establishment authentication/authorization procedure (S604).

If dynamic policy and charging control (PCC) is applied to the PDU session to be established, the SMF 306 executes PCF selection (S605). Otherwise, the SMF 306 may apply local policies.

The SMF 306 may establish an SM policy association with the PCF 305 to execute an SM policy association establishment procedure to acquire default PCC rules for the PDU session (S606). Thus, the PCC Rules can be acquired before a UPF 330 is selected.

The SMF 306 executes UPF selection and selects one or more UPFs 330 (S607). The SMF 306 transmits an N4 session establishment request message to the selected UPF(s) 330 (S608).

The UPF 330 responds to the SMF 306 by transmitting an N4 session establishment response message (S609).

If a plurality of UPFs 330 are selected for the PDU session, this N4 session establishment procedure is started for each UPF 330.

The SMF 306 transmits a Namf_Communication_N1N2MessageTransfer message to the AMF 301 (S610). Here, the Namf_Communication_N1N2MessageTransfer message includes PDU Session ID, N2 SM information, CN tunnel info, S-NSSAI (eMBB_3), and N1 SM container. Here, the N2 SM information includes PDU session ID, QFI(s), QoS profile(s), and others. If a plurality of UPFs 330 are used for a PDU session, the CN tunnel info includes tunnel information related to the plurality of UPFs 330, which terminate an N3. The N1 SM container includes a PDU session establishment accept that the AMF 301 is required to supply to the UE 10. The PDU session establishment accept includes the S-NSSAI (eMBB_3). The Namf_Communication_N1N2MessageTransfer message includes the PDU session ID so that the AMF 301 can be informed of which access is used for the UE 10.

The AMF 301 transmits an N2 PDU session request message to the gNB 20-11 (S611). Here, the AMF 301 transmits to the gNB 20-11 through the N2 PDU session request message a Non-Access-Stratum (NAS) message including the PDU session ID and the PDU session establishment accept, whose destination is the UE 10, and the N2 SM information received from the SMF 306.

The gNB 20-11 identifies the PDU session corresponding to the S-NSSAI (eMBB_3) using the PDU Session ID. In the identified PDU session, the gNB 20-11 also identifies the QoS flows using the QFI(s) included in the N2 SM information, and performs QoS control for each QoS flow according to the QoS profile(s) corresponding to each QFI.

The gNB 20-11 forwards the NAS message including the PDU session ID and the N1 SM container to the UE 10 (S612). Here, the N1 SM container includes the PDU session establishment accept.

The gNB 20-11 transmits an N2 PDU session response message to the AMF 301 (S613).

The AMF 301 forwards the N2 SM information received from the gNB 20-11 to the SMF 306 through an Nsmf_PDUSession_UpdateSMContext request message including the SM context ID and the N2 SM information (S614).

The SMF 306 starts an N4 session modification procedure with the UPF 330 and transmits an N4 session modification request message to the UPF 330 (S615). The SMF 306 provides not only forwarding rules but also the AN tunnel info to the UPF 330.

The UPF 330 transmits an N4 session modification response message to the SMF 306 (S616). In a case where a plurality of UPFs 330 are used in a PDU session, the targets for performing the above-described N4 session modification procedure are all UPFs 330, which terminate the N3. According to the above-described processing, the PDU session in step S509 of Fig. 4A is established.

In step S517 of Fig. 4B, since the UE 10 does not know when it will be able to be within the coverage of the gNB 20-32, the network may start the services of eMBB_3 using the PDU session through the gNB 20-11. Although the gNB 20-11 can provide sufficient throughput for the services of eMBB_1, it cannot necessarily provide sufficient throughput for the services of eMBB_3. Therefore, the services may be provided in a poor quality condition. The AMF 301 may not start using the services of eMBB_3 until the procedure of changing the PDU session including the gNB 20-32 is completed. As a result, it may take a long time to wait for the start of a service. For example, in step S515 of Fig. 4A, the gNB 20-11 may set a timer in conjunction with setting of a measurement executed by the UE 10 in RRC_CONNECTED mode. If the gNB 20-11 cannot decide to execute the SN addition before the expiration of the timer, the gNB 20-11 may start a procedure of releasing the PDU session.

The UE 10 may give up on using a service of eMBB_3 while waiting for the start of using the service. In this case, there is a concern that the establishment of the PDU session itself through the gNB 20-11 may be wasted.

[7. Connection Procedure 2 For Using Network Slice From RRC_IDLE Mode] Fig. 6A illustrates another example of a connection procedure for using S-NSSAI (eMBB_3). Fig. 6B illustrates an example of a procedure subsequent to Fig. 6A. As described above, it is assumed that the UE 10 in RRC_IDLE and CM-IDLE state (S501) performs a cell reselection procedure of a basic coverage cell (gNB 20-11, gNB 20-12, gNB 20-13), and, for example, camps on the gNB 20-11 (S502). Here, the UE 10 has completed the registration procedure illustrated in Fig. 3. In step S411 of the registration procedure, the AMF 301 provides not only the allowed NSSAI but also assistance information of the allowed NSSAI to the UE 10. This assistance information of the allowed NSSAI is, for example, assistance information for identifying the correspondence between each S-NSSAI included in the allowed NSSAI and the carrier frequency of the cell that provides the S-NSSAI. In a case where a plurality of carrier frequencies are used for each S-NSSAI, priority may be set for the plurality of carrier frequencies. This assistance information serves as setting information including information (first information) for setting a measurement (first measurement) of one or more frequencies used for each network slice (e.g. eMBB_1, eMBB_2, eMBB_3). The first information or the setting information includes information on one or more frequencies used for each network slice, that is, information for identifying one or more frequencies used for each network slice.

When the UE 10 decides to use the S-NSSAI (eMBB_3) (S503), the UE 10 refers to the assistance information of the allowed NSSAI to identify the carrier frequencies corresponding to the S-NSSAI (eMBB_3). In addition to the cell reselection procedure on the carrier frequencies of the gNB 20-11 to the gNB 20-13, which are basic coverage cells, the UE 10 starts the measurement of the carrier frequencies corresponding to the S-NSSAI (eMBB_3) as candidate frequencies for carrier aggregation (CA)/dual connectivity (DC) (S530).

If the set criteria or threshold value is fulfilled on the basis of the measurement of the carrier frequencies corresponding to the S-NSSAI (eMBB_3), the UE 10 transmits an RRCSetup request message to the camped-on gNB 20-11 (S504). When the UE 10 receives an RRCSetup message from the gNB 20-11 (S505), the UE 10 transitions to RRC_CONNECTED and CM-IDLE state (S506), and transmits an RRCSetup complete message to the gNB 20-11 to complete the RRC settings (S507). The UE 10 includes the measurement results of the cell corresponding to the S-NSSAI (eMBB_3) into the RRCSetup complete message.

The gNB 20-11 transmits a PDU session establishment request message including the measurement results of the cell corresponding to the S-NSSAI (eMBB_3) to the AMF 301 (S508). The AMF 301 decides to execute a PDU session establishment procedure based on the measurement results (S531) to establish a PDU session between the UE 10 and the DN 340 through the gNB 20-11 and the UPF 330 (S509). The UE 10 enters RRC_CONNECTED and CM-CONNECTED state (S510). The processing after step S511 is the same as that in Figs. 4A and 4B, and thus description thereof will be omitted here.

As described above, according to the procedures illustrated in Figs. 6A and 6B, it is possible to start the PDU session establishment procedure for using the S-NSSAI (eMBB_3) within the coverage of the cell corresponding to the S-NSSAI (eMBB_3). Therefore, it is possible to solve the problem that the services of eMBB_3 may be received in a poor quality condition through the gNB 20-11 in step S517 of Fig. 6B, or the issue that it may take a long time to wait for the start of a service through the gNB 20-32.

### [8. Connection Procedure 1 For Using Network Slice From RRC_CONNECTED Mode]

For example, the UE 10 may start a connection procedure for using the S-NSSAI (eMBB_3) while using the services of the S-NSSAI (eMBB_1) through the gNB 20-11. In this case, in the UE 10, a PDU session is established between the UE 10 and the DN 340 through the gNB 20-11 and the UPF 330, according to the processing of S501 to S516 in Fig. 4A.

Fig. 7 illustrates another example of a connection procedure for using S-NSSAI (eMBB_3). When the UE 10 in RRC_CONNECTED and CM-CONNECTED state (S510) decides to use S-NSSAI (eMBB_3) (S503), the UE 10 transmits a NAS message including a service request for using the S-NSSAI (eMBB_3) to the gNB 20-11 (S532). When receiving the NAS message, the gNB 20-11 forwards the service request included in the NAS message to the AMF 301 (S533).

The AMF 301 generates assistance information for the network slice based on the S-NSSAI (eMBB_3) included in the service request (S534). This assistance information for the network slice is assistance information for identifying the correspondence between the S-NSSAI (eMBB_3) and the carrier frequency of the cell that provides this S-NSSAI.

When the AMF 301 provides the assistance information for the network slice to the gNB 20-11 (S535), the gNB 20-11 uses an RRCReconfiguration message to set to the UE 10 a measurement of the carrier frequency corresponding to the S-NSSAI (eMBB_3) as a CA/DC candidate frequency (S536). When the UE 10 sets the measurement of the carrier frequency corresponding to the S-NSSAI (eMBB_3), the UE 10 responds with an RRCReconfigurationComplete message (S537).

In addition to measuring the carrier frequencies of the gNB 20-11 to the gNB 20-13, which are basic coverage cells, the UE10 measures candidate frequencies for the SCG or SCell based on the S-NSSAI (eMBB_3), using Measurement gap (S538).

Here, the measurement of the carrier frequencies of the gNB 20-11 to the gNB 20-13, which are basic coverage cells, is performed to determine the necessity of handover of the basic coverage cell (e.g., gNB 20-11) to which the UE10 in RRC_CONNECTED and CM-CONNECTED state is connected. For example, when the measurement result of the carrier frequency of the gNB 20-11 fulfills criteria (or event conditions), the UE 10 starts transmitting a measurement report to the gNB 20-11, which is the source cell, and the source cell decides on the handover of the UE 10 to the target cell (e.g., the gNB 20-12) based on the measurement result included in the measurement report.

The processing of steps S518 to S528 is the same as the processing in Fig. 4B, and thus description thereof will be omitted here.

When the AMF 301 completes the procedure of changing the PDU session including the gNB 20-32 (S528), the AMF 301 responds to the gNB 20-11 with a service accept (S539), and the gNB 20-11 responds to the UE 10 with a NAS message including the service accept (S540).

In addition, the AMF 301 may not generate assistance information for the network slice in step S534, instead of step S535, may notify the gNB 20-11 of the S-NSSAI (eMBB_3) included in the service request, and instruct to add a measurement of the carrier frequency corresponding to the S-NSSAI (eMBB_3) as a CA/DC candidate frequency.

In step S538, as with the processing in Fig. 4B, since the UE 10 does not know when it will be able to be within the coverage of the gNB 20-32, the network may start the services of eMBB_3 using the PDU session through the gNB 20-11. Although the gNB 20-11 can provide sufficient throughput for the services of eMBB_1, it cannot necessarily provide sufficient throughput for the services of eMBB_3. Therefore, the services may be provided in a poor quality condition. The AMF 301 may not start using the services of eMBB_3 until the procedure of changing the PDU session including the gNB 20-32 is completed. As a result, it may take a long time to wait for the start of a service. Therefore, in step S536, the gNB 20-11 may set a timer in the UE 10 in conjunction with setting of a measure of the carrier frequency corresponding to the S-NSSAI (eMBB_3) as a CA/DC candidate frequency. If the gNB 20-11 cannot decide to execute the SN addition before the expiration of the timer, the gNB 20-11 may start a procedure of rejecting the service request for using the S-NSSAI (eMBB_3).

### [9. Connection Procedure 2 For Using Network Slice From RRC_CONNECTED Mode]

Fig. 8 illustrates still another example of a connection procedure for using S-NSSAI (eMBB_3). Here, it is assumed that the UE 10 has completed the registration procedure illustrated in Fig. 3. Furthermore, the UE 10 has completed the establishment of a PDU session between the UE 10 and the DN 340 through the gNB 20-11 and the UPF 330 according to the processing of steps S501 to S516 in Fig. 4A. In step S411 of the registration procedure in Fig. 3, the AMF 301 provides not only the allowed NSSAI but also assistance information of the allowed NSSAI to the UE 10. This assistance information of the allowed NSSAI is, for example, assistance information for identifying the correspondence between each S-NSSAI included in the allowed NSSAI and the carrier frequency of the cell that provides the S-NSSAI. In a case where a plurality of carrier frequencies are used for each S-NSSAI, priority may be set for the plurality of carrier frequencies.

This assistance information of the allowed NSSAI may be provided from the AMF 301 to the gNB 20-11 as part of the UE context stored by the gNB 20-11 when a PDU session is established through the gNB 20-11. Then, the gNB 20-11 may provide this assistance information of the allowed NSSAI to the UE 10 from the UE context of the UE 10 it owns.

Alternatively, the gNB 20-11 may generate assistance information of the allowed NSSAI based on the UE context of the UE 10 it owns, and provide it to the UE 10. Here, the UE context stores information on the allowed NSSAI and the S-NSSAI for each PDU session.

The UE 10 in RRC_CONNECTED and CM-CONNECTED state (S510) decides to use the S-NSSAI (eMBB_3) (S503). The UE 10 refers to the assistance information of the allowed NSSAI to identify the carrier frequency corresponding to the S-NSSAI (eMBB_3) (S541), measures the carrier frequencies of the gNB 20-11 to the gNB 20-13, which are basic coverage cells, and also uses the measurement gap to measure candidate frequencies for the SCG or SCell based on the S-NSSAI (eMBB_3) (S542).

When the measurement result of the SCG or SCell corresponding to the S-NSSAI (eMBB_3), for example, the measurement result of the gNB 20-32, fulfills criteria or a threshold value, the UE 10 transmits to the gNB 20-11 a NAS message including a service request for using the S-NSSAI (eMBB_3) (S532). When receiving the NAS message, the gNB 20-11 forwards the service request included in the NAS message to the AMF 301 (S533). Subsequently, the UE 10 transmits to the gNB 20-11 a measurement report including the measurement result of the gNB 20-32 (S518). The gNB 20-11, which is a master node (MN), decides to execute secondary node (SN) addition based on the received measurement report (S519), and transmits an SN addition request message to the gNB 20-32 (S520). The processing after step S521 is the same as that in Fig. 4B, and thus description thereof will be omitted here.

As described above, according to the procedures illustrated in Fig. 8, it is possible to start the service request for using the S-NSSAI (eMBB_3) within the coverage of the cell corresponding to the S-NSSAI (eMBB_3). Therefore, it is possible to solve the problem that the services of eMBB_3 may be received in a poor quality condition through the gNB 20-11, or the issue that it may take a long time to wait for the start of a service through the gNB 20-32.

### [10. Connection Procedure 3 For Using Network Slice From RRC_CONNECTED Mode]

Fig. 9 illustrates still another example of a connection procedure for using S-NSSAI (eMBB_3). Here, it is assumed that the UE 10 has completed the registration procedure illustrated in Fig. 3. Furthermore, the UE 10 has completed the establishment of a PDU session between the UE 10 and the DN 340 through the gNB 20-11 and the UPF 330, according to the processing of steps S501 to S516 in Fig. 4A. In step S411 of the registration procedure, the AMF 301 provides not only the allowed NSSAI but also assistance information of the allowed NSSAI to the UE 10. This assistance information of the allowed NSSAI is, for example, assistance information for identifying the correspondence between each S-NSSAI included in the allowed NSSAI and the carrier frequency of the cell that provides the S-NSSAI. In a case where a plurality of carrier frequencies are used for each S-NSSAI, priority may be set for the plurality of carrier frequencies. This assistance information of the allowed NSSAI may be generated on the basis of the UE context of the UE 10 owned by the gNB 20-11 and provided to the UE 10 when a PDU session is established through the gNB 20-11. Here, the UE context stores information on the allowed NSSAI and the S-NSSAI for each PDU session.

As in Fig. 6A, when executing the processing of steps S510, S503, S541, and S542, the UE 10 transmits to gNB 20-11 a measurement report including the measurement result of the gNB 20-32 and the S-NSSAI (eMBB_3) when the measurement result of the SCG or SCell corresponding to the S-NSSAI (eMBB_3), for example, the measurement result of the gNB 20-32, fulfills the criteria (S543). The gNB 20-11, which is a master node (MN), decides to execute secondary node (SN) addition for using the S-NSSAI (eMBB_3) based on the received measurement report (S544), and transmits to the gNB 20-32 an SN addition request message for using the S-NSSAI (eMBB_3) (S545). Here, the SN addition request message for using the S-NSSAI (eMBB_3) includes the S-NSSAI (eMBB_3) or mapping between the S-NSSAI (eMBB_3) and the S-NSSAI (eMBB_3) of the HPLMN. Thus, the gNB 20-32 is notified that this SN addition request is an SN addition request for using the S-NSSAI (eMBB_3). After that, the processing of steps S521 to S524 is the same as those in Fig. 4B, and thus description thereof will be omitted here.

When the UE 10 executes a random access procedure for the gNB 20-32, which is an SN (S525), the gNB 20-32 notifies the AMF 301 of a PDU session modification indication for using the S-NSSAI (eMBB_3) (S546). The AMF 301 performs procedures necessary to change the bearer with the UPF 330 (S527), transmits a PDU session modification confirmation to the gNB 20-32 (S528), and accordingly, completes the procedure of changing the PDU session established between the UE 10 and the DN 340.

Due to the procedure of changing the PDU session, the AMF 301 changes the S-NSSAI for each PDU session of the UE context of the UE 10 to the S-NSSAI (eMBB_3), and transmits a context modification request message to the gNB 20-11 (S547). When receiving the context modification request message, the gNB 20-11 changes the S-NSSAI for each PDU session of the UE context of the UE 10 to the S-NSSAI (eMBB_3).

As described above, according to the procedures illustrated in Fig. 9, as with the procedures illustrated in Fig. 8, a service request for using S-NSSAI (eMBB_3) can be started within the coverage of the cell corresponding to the S-NSSAI (eMBB_3). Therefore, it is possible to solve the problem that the services of eMBB_3 may be received in a poor quality condition through the gNB 20-11, or the issue that it may take a long time to wait for the start of a service through the gNB 20-32. In addition, according to the procedures illustrated in Fig. 9, the procedure of changing the PDU session necessary for using the S-NSSAI (eMBB_3) can be executed without transmitting a NAS message including a service request for using the S-NSSAI (eMBB_3) from the UE 10 to the AMF 301.

### [11. Configuration of Terminal Device (UE 10)]

Fig. 10 is a diagram illustrating an example of a configuration of the terminal device 10 (UE 10) that is a radio communication device according to the present embodiment. The terminal device 10 includes a communication unit 11 (transceiver), a storage unit 12, and a control unit 13. The communication unit 11 includes a reception processing unit 111 and a transmission processing unit 112, and is connected to an antenna 113. The communication unit 11 may include a plurality of reception processing units 111 and a plurality of transmission processing units 112. A plurality of antennas 113 may be provided. The control unit 13 is configured by a processor (hardware processor) such as a central processing unit (CPU), a micro-processing unit (MPU), or a graphics processing unit (GPU). For example, the control unit 13 is realized by the processor executing various programs stored in a storage device inside of the terminal device 10 using a random access memory (RAM) or the like as a work area. The processor referred to here may include an integrated circuit such as an application specific integrated circuit (ASIC) or a field-programmable gate array (FPGA). The terminal device 10 includes components other than the communication unit 11, the storage unit 12, and the control unit 13, such as a display unit for displaying data or information, an input unit for inputting user instructions or data, a speaker, and a microphone.

The reception processing unit 111 performs reception processing on a downlink signal received via the antenna 113. The reception processing unit 111 includes a radio reception unit 111a, a demultiplexing unit 111b, a demodulation unit 111c, and a decoding unit 111d.

The radio reception unit 111a performs, on the downlink signal, down-conversion, removal of unnecessary frequency components, control of amplification level, orthogonal demodulation, conversion into a digital signal, removal of the guard interval (cyclic prefix), extraction of a frequency domain signal through fast Fourier transformation, and the like. The demultiplexing unit 111b separates, from the signals output from the radio reception unit 111a, downlink channels such as physical downlink shared channel (PDSCH) and physical downlink control channel (PDCCH), and downlink reference signals. The demodulation unit 111c performs, on the modulated symbols of the downlink channel, demodulation of the received signals by using a modulation scheme such as binary phase shift keying (BPSK) or quadrature phase shift keying (QPSK).

The modulation scheme used by the demodulation unit 111c may be quadrature amplitude modulation (16QAM), 64QAM, or 256QAM. In this case, the distances between signal points on the constellation do not necessarily have to be equal. The constellation may be a non-uniform constellation (NUC). The decoding unit 111d performs decoding processing on the coded bits of the demodulated downlink channel. The decoded downlink data and downlink control information are output to the control unit 13.

The transmission processing unit 112 performs transmission processing of uplink control information and uplink data. The transmission processing unit 112 includes an encoding unit 112a, a modulation unit 112b, a multiplexing unit 112c, and a radio transmission unit 112d.

The encoding unit 112a encodes the uplink control information and uplink data, which are input from the control unit 13, by using an encoding method such as block encoding, convolutional encoding, turbo encoding, or the like. The encoding unit 112a may perform encoding using a polar code or a low density parity check code (LDPC) code. The modulation unit 112b modulates the encoded bits output from the encoding unit 112a by using a predetermined modulation scheme such as BPSK, QPSK, 16QAM, 64QAM, or 256QAM. In this case, the distance between signal points on the constellation do not necessarily have to be equal. The constellation may be a non-uniform constellation. The multiplexing unit 112c multiplexes the modulated symbols of each channel and the uplink reference signals, and deploys the resulting signals in a predetermined resource element. The radio transmission unit 112d performs various signal processing on the signals from the multiplexing unit 112c. For example, the radio transmission unit 112d performs processing such as conversion into the frequency domain through fast Fourier transform, addition of a guard interval (cyclic prefix), generation of a baseband digital signal, conversion into an analog signal, orthogonal modulation, upconversion, removal of redundant frequency components, and power amplification. The signal generated by the transmission processing unit 112 is transmitted from the antenna 113.

The storage unit 12 is a storage device from and to which data can be read and written, such as DRAM, SRAM, flash memory, and hard disk. The storage unit 12 functions as a storage means of the terminal device 10. The storage unit 12 temporarily or permanently stores various programs and various data for the operation of the terminal device 10.

The control unit 13 includes a network slice control unit 131, a measurement control unit 132, and a communication control unit 133.

The network slice control unit 131 controls the configured NSSAI acquired from the UDM 307 to be stored in the storage unit 12.

The network slice control unit 131 controls the storage unit 12 to store the allowed NSSAI acquired from the AMF 301 or the base station device ((R)AN 20).

The network slice control unit 131 generates requested NSSAI. The requested NSSAI is one of the following:
- Default configured NSSAI
- Configured-NSSAI or part thereof
- Allowed-NSSAI or part thereof
- NSSAI in which one or more S-NSSAIs included in configured-NSSAI is added to allowed-NSSAI or part thereof

The network slice control unit 131 controls the storage unit 12 to store assistance information of the allowed NSSAI acquired from the AMF 301 or the base station device.

The measurement control unit 132 controls the cell selection/reselection procedure to be executed in RRC_IDLE mode.

The measurement control unit 132 controls the cell reselection procedure based on the default S-NSSAI acquired from the AMF 301.

The measurement control unit 132 identifies the default S-NSSAI for each SST based on information regarding the network slice notified from the network slice control unit 131, for example, slice/service type (SST). The measurement control unit 132 controls the cell reselection procedure based on the default S-NSSAI for each SST.

The measurement control unit 132 sets, as examples of setting information for measurement instructed by the network, parameters such as measurement objects, reporting configurations, measurement identities, quantity configurations, and measurement gaps. This setting of the parameters for measurement may include storing necessary information in the storage unit 12. The setting information may include information (parameters) for selecting or reselecting a cell to camp on or for measuring a cell to be a handover target. The setting information may include information (parameters) for measuring one or more frequencies used in the network slice (first network slice) that is decided to be used among the plurality of network slices. The assistance information of the allowed NSSAI may also be part of the setting information for measurement.

The measurement control unit 132 refers to the assistance information of the allowed NSSAI to identify the carrier frequency corresponding to the S-NSSAI (e.g., eMBB_3) that is the requested service. In addition to the cell reselection procedure on the carrier frequency of the basic coverage cell, it controls the measurement of the carrier frequency corresponding to the S-NSSAI (eMBB_3) as a candidate frequency for CA/DC.

The measurement control unit 132 refers to the assistance information of the allowed NSSAI to identify the carrier frequency corresponding to the S-NSSAI (e.g., eMBB_3) that is the requested service. In addition to the measurement of the carrier frequency of a master cell group (MCG) or primary cell (Pcell), the measurement control unit 132 controls the measurement of the carrier frequency corresponding to the S-NSSAI (eMBB_3) as a candidate frequency for CA/DC.

The measurement control unit 132 determines whether or not the measurement result fulfills the criteria or threshold value according to the set parameters for measurement, and controls the transmission of a measurement report including the measurement result.

The various procedures described as being performed by the terminal device 10 (UE 10) in Figs. 3 to 9 are performed by the control unit 13. In other words, the control unit 13 performs the processing of steps described as being performed by the UE 10 in the registration procedure in Fig. 3. The control unit 13 performs the processing of steps described as being performed by the UE 10 in the connection procedure for using the S-NSSAI (eMBB-3) in Figs. 4A and 4B. The control unit 13 performs the processing of steps described as being performed by the UE 10 in the PDU session establishment procedure in Figs. 5A and 5B. The control unit 13 performs the processing of steps described as being performed by the UE 10 in the connection procedure for using the S-NSSAI (eMBB-3) in Figs. 6A to 9.

The communication control unit 133 controls communication with the base station device 20. The communication control unit 133 also controls communication with network devices via the base station device 20.

The communication control unit 133 controls the settings of carrier aggregation (CA)/dual connectivity (DC) according to instructions from the base station device 20.

### [12. Configuration of Base Station Device ((R)AN20)]

Fig. 11 is a diagram illustrating an example of a configuration of the base station device ((R)AN 20) according to the present embodiment. The base station device 20 includes a communication unit 21 (transceiver), a storage unit 22, a network communication unit 23, and a control unit 24. The communication unit 21 includes a reception processing unit 211 and a transmission processing unit 212, and is connected to an antenna 213. The communication unit 21 may include a plurality of reception processing units 211 and a plurality of transmission processing units 212. A plurality of antennas 213 may be provided. The control unit 24 is configured by a processor (hardware processor) such as a central processing unit (CPU), a micro-processing unit (MPU), or a graphics processing unit (GPU). For example, the control unit 24 is realized by the processor executing various programs stored in a storage device inside of the base station device 20 using a random access memory (RAM) or the like as a work area. The processor referred to here may include an integrated circuit such as an application specific integrated circuit (ASIC) or a field-programmable gate array (FPGA).

The reception processing unit 211 performs reception processing on an uplink signal received via the antenna 213. The reception processing unit 211 includes a radio reception unit 211a, a demultiplexing unit 211b, a demodulation unit 211c, and a decoding unit 211d.

The radio reception unit 211a performs, on the uplink signal, down-conversion, removal of unnecessary frequency components, control of amplification level, orthogonal demodulation, conversion into a digital signal, removal of the guard interval (cyclic prefix), extraction of a frequency domain signal through fast Fourier transformation, and the like. The demultiplexing unit 211b separates, from the signals output from the radio reception unit 211a, uplink channels such as physical uplink shared channel (PUSCH) and physical uplink control channel (PUCCH), and uplink reference signals. The demodulation unit 211c performs, on the modulated symbols of the uplink channel, demodulation of the received signals by using a modulation scheme such as binary phase shift keying (BPSK) or quadrature phase shift keying (QPSK). The modulation scheme used by the demodulation unit 211c may be quadrature amplitude modulation (16QAM), 64QAM, or 256QAM. In this case, the distances between signal points on the constellation do not necessarily have to be equal. The constellation may be a non-uniform constellation (NUC). The decoding unit 211d performs decoding processing on the coded bits of the demodulated uplink channel. The decoded uplink data and uplink control information are output to the control unit 24.

The transmission processing unit 212 performs transmission processing of uplink control information and uplink data. The transmission processing unit 212 includes an encoding unit 212a, a modulation unit 212b, a multiplexing unit 212c, and a radio transmission unit 212d.

The encoding unit 212a encodes the downlink control information and downlink data, which are input from the control unit 24, by using an encoding method such as block encoding, convolutional encoding, turbo encoding, or the like. The encoding unit 212a may perform encoding using a polar code or a low density parity check code (LDPC) code. The modulation unit 212b modulates the encoded bits output from the encoding unit 212a by using a predetermined modulation scheme such as BPSK, QPSK, 16QAM, 64QAM, or 256QAM. In this case, the distance between signal points on the constellation do not necessarily have to be equal. The constellation may be a non-uniform constellation. The multiplexing unit 212c multiplexes the modulated symbols of each channel and the downlink reference signals, and deploys the resulting signals in a predetermined resource element. The radio transmission unit 212d performs various signal processing on the signals from the multiplexing unit 212c. For example, the radio transmission unit 212d performs processing such as conversion into the frequency domain through fast Fourier transform, addition of a guard interval (cyclic prefix), generation of a baseband digital signal, conversion into an analog signal, orthogonal modulation, upconversion, removal of redundant frequency components, and power amplification. The signal generated by the transmission processing unit 212 is transmitted from the antenna 213.

The storage unit 22 is a storage device from and to which data can be read and written, such as DRAM, SRAM, flash memory, and hard disk. The storage unit 22 functions as a storage means for the base station device 20. The storage unit 22 temporarily or permanently stores various programs and various data for the operation of the base station device 20. The storage unit 22 stores, for example, the above-mentioned QoS profile(s) and UE context of the UE 10.

The network communication unit 23 is a communication interface for communicating with a node located at higher level on the network (e.g., 5GC/NGC 30). For example, the network communication unit 23 is a LAN interface such as a NIC. The network communication unit 23 may be a wired interface or may be a wireless interface. The network communication unit 23 functions as a network communication means of the base station device 20.

The control unit 24 includes a neighboring cell information management unit 241, a radio resource control unit 242, a network slice control unit 243, and a communication control unit 244.

The neighboring cell information management unit 241 exchanges information with neighboring cells through the network communication unit 23 and acquires information such as information regarding network slices supported by the neighboring cells, and carrier frequencies. The neighboring cell information management unit 241 stores the acquired information or necessary information in the acquired information in the storage unit 22.

The radio resource control unit 242 performs control related to radio communication executed with the terminal device 10. For example, the radio resource control unit 242 sets in the terminal device 10 parameters for the cell selection/reselection procedure to be executed by the terminal device 10 in RRC_IDLE mode, and parameters for the measurement to be executed by the terminal device 10 in RRC_CONNECTED mode. The radio resource control unit 242 controls the mobility of the terminal device 10, for example, handover.

Here, the handover includes SN change, PSCell change, and the like.

The network slice control unit 243 provides to the terminal device 10 information necessary for the terminal device 10 in RRC_IDLE mode to execute the cell selection/reselection procedure based on a network slice, or necessary information for the terminal device 10 in RRC_CONNECTED mode to execute the measurement and reporting based on a network slice. For example, the network slice control unit 243 provides assistance information of the allowed NSSAI to the terminal device 10. This assistance information of the allowed NSSAI is acquired from the 5GC/NGC 30 through the network communication unit 23 as part of the UE context of the terminal device 10. Alternatively, this assistance information of the allowed NSSAI is generated by the network slice control unit 243 based on the information on neighboring cells to be managed by the neighboring cell information management unit 241 and the allowed NSSAI.

The various procedures described as being performed by the base station device 20 ((R)AN 20) in Figs. 3 to 9 are performed by the control unit 24. In other words, the control unit 24 performs the processing of steps described as being performed by the (R)AN 20 in the registration procedure in Fig. 3. The control unit 24 performs the processing of steps described as being performed by the (R)AN 20 (gNB 20-11) in the connection procedure for using the S-NSSAI (eMBB-3) in Figs. 4A and 4B. The control unit 24 performs the processing of steps described as being performed by the (R)AN 20 (gNB 20-11) in the PDU session establishment procedure in Figs. 5A and 5B. The control unit 24 performs the processing of steps described as being performed by the (R)AN 20 (gNB 20-11, gNB 20-32) in the connection procedure for using the S-NSSAI (eMBB-3) in Figs. 6A to 9.

The communication control unit 244 controls communication with the terminal device 10. The communication control unit 244 also forwards the NAS message from the 5GC/NGC 30 to the terminal device 10.

The communication control unit 244 executes control and processing necessary for carrier aggregation (CA)/dual connectivity (DC) based on the measurement results acquired from the terminal device 10 by the radio resource control unit 242.

### 13. Configuration of Management Device (AMF 301)]

Fig. 12 is a diagram illustrating an example of a configuration of the management device 311 according to the present embodiment. The management device 311 is a device that functions as the AMF 301 in the core network 30. The management device 311 includes a communication unit 31, a control unit 32, and a storage unit 33. The control unit 32 is configured by a processor (hardware processor) such as a central processing unit (CPU), a micro-processing unit (MPU), or a graphics processing unit (GPU). For example, the control unit 32 is realized by the processor executing various programs stored in a storage device inside of the management device 311 using a random access memory (RAM) or the like as a work area. The processor referred to here may include an integrated circuit such as an application specific integrated circuit (ASIC) or a field-programmable gate array (FPGA).

The storage unit 33 is a storage device from and to which data can be read and written, such as DRAM, SRAM, flash memory, and hard disk. The storage unit 33 functions as a storage means of the management device 311 (AMF 301). The storage unit 33 temporarily or permanently stores various programs and various data for the operation of the management device 311.

The communication unit 31 communicates with the UE 10 via the reference point N1. The communication unit 31 communicates with the base station device 20 via the reference point N2.

The control unit 32 performs processing for UE mobility management. The control unit 32 generates network slice selection assistance information (e.g., allowed NSSAI) including information for identifying one or more network slices that are allowed to be used within a UE registration area. The control unit 32 generates setting information for measurement of one or more frequencies used for each of the one or more network slices included in the network slice selection assistance information. The setting information includes, for example, information (e.g., assistance information of the allowed NSSAI) for identifying one or more frequencies used for each of the one or more network slices included in the network slice selection assistance information. The control unit 32 provides the network slice selection assistance information and the setting information for measurement to the base station device 20 through the communication unit 31. When the result of the measurement executed by the UE 10 based on the network slice selection assistance information and the setting information for measurement fulfills a threshold value in the UE 10, processing related to a PDU session establishment request or a service request for a first network slice that has been decided to be used among one or more network slices is executed. The network slice selection assistance information and the setting information for measurement, which are described above, are provided from the control unit 32 to the UE 10 or the base station device 20 before the first network slice is decided to be used in the UE 10.

The control unit 32 may generate information on a second network slice as a default from among the one or more network slices included in the network slice selection assistance information, and transmit the information on the second network slice to the base station device 20. The setting information for measurement may include information for identifying a second frequency for selecting or reselecting a cell to camp on or for measuring a cell to be a handover target, based on the second network slice.

The network slices may be classified on the basis of slice/service type (SST), and the control unit 32 may generate information on a default second network slice for each SST. The control unit 32 may acquire information for identifying the first network slice and information regarding the location of the terminal device 10 (UE 10), identify a cell to which the first network slice is to be provided, based on the information regarding the location of the terminal device 10, and transmit to the base station device 20 a notification to instruct activation of the identified cell.

The various procedures described as being performed by the AMF 301 in Figs. 3 to 9 are performed by the control unit 32. For example, the control unit 32 performs the processing of steps described as being performed by the AMF 301 in the registration procedure in Fig. 3. The control unit 32 performs the processing of steps described as being performed by the AMF 301 in the connection procedure for using the S-NSSAI (eMBB-3) in Figs. 4A and 4B. The control unit 32 performs the processing of steps described as being performed by the AMF 301 in the PDU session establishment procedure in Figs. 5A and 5B. The control unit 32 performs the processing of steps described as being performed by the AMF 301 in the connection procedure for using the S-NSSAI (eMBB-3) in Figs. 6A to 9. The control unit 32 may execute not only the functions of the AMF 301 but also at least one or some of the functions of other NFs in the core network 30. The communication unit 31 may have a function of communicating with other NFs. The control unit 32 may execute functions of NFs other than the AMF 301. For example, the control unit 32 may execute the functions of the SMF 306 and the like. In this case, the control unit 32 performs the various procedures described above as being performed by the SMF 306.

### [14. Capacity Boost Cell control]

It is expected that the coverage of a base station operating as a capacity boost cell that utilizes frequencies in the millimeter-wave band will become a smaller cell due to the propagation characteristics of that frequency band. In order to provide wide coverage, a large number of base stations are required to be installed. In recent years, energy saving in networks has become an important issue partly due to efforts to achieve the sustainable development goals (SDGs). Therefore, it is conceivable to dynamically control capacity boost cells in an on-demand manner in contrast to statically controlled basic coverage cells. For example, control for activating a capacity boost cell (i.e., transitioning from an off state to an on state) according to a network slice may be introduced in accordance with a service request.

Fig. 13 illustrates an example of control of a capacity boost cell.

In step S508 of Fig. 4A, when receiving the PDU session establishment request (or the service request in step S533 of Fig. 7) message forwarded from the gNB 20-11, the AMF 301 identifies the location of the UE 10 based on information regarding the location of the UE 10 included in the PDU session establishment request (or service request) (S701). Here, the information regarding the location of the UE 10 is, for example, information regarding the location detected using a GNSS receiver equipped with the UE 10.

Here, the UE 10 may detect location-related information in cooperation with a network-assisted GNSS means, that is, NG-RAN. In UE-Based mode, the UE 10 acquires assistance data from a location management function (LMF) and performs a GNSS-related measurement and a location calculation. For example, there is a widely known method called assisted-GNSS.

In cases where a signal from the GNSS cannot be received, the UE 10 may detect information regarding the location by a means other than the GNSS. For example, the UE 10 detects information regarding its own location by using a technique called WLAN positioning, Bluetooth positioning, or terrestrial beacon systems (TBS) positioning.

In WLAN positioning, the UE 10 measures a received signal strength (RSSI) at each WLAN access point and calculates the location based on information on the known coordinates of the WLAN access point and its measured value. Furthermore, the UE 10 may measure a round trip time (RTT) between the UE 10 and the WLAN access point and calculates its location.

In Bluetooth positioning, the UE 10 measures a received signal strength (RSSI) at each Bluetooth beacon and calculates the location based on information on the known coordinates of the Bluetooth beacon and its measured value.

The information regarding the location of the UE 10 provided to the AMF 301 is not limited to the method of including information on the location detected by the UE 10. For example, the AMF 301 may acquire information regarding the location of the UE 10 through the LMF.

In a case where the UE 10 is equipped with a GNSS receiver, the UE 10 in UE-Assisted mode performs GNSS-related measurements such as code phase, doppler, and carrier phase, and transmits the resulting measurement values to the LMF, and the LMF calculates the location. For the UE 10 that is equipped with a GNSS receiver but cannot receive signals from the GNSS or that is not equipped with a GNSS, the LMF may acquire information regarding the location of the UE 10 by using a positioning technique called observed time difference of arrival (OTDOA), multi-round trip times (Multi-RTT), downlink angle-of-departure (DL AoD), downlink time difference of arrival (DL TDOA), uplink time difference of arrival (UL TDOA), or angle of arrival UL (AoA), or a positioning technique using cell ID (CID).

For example, in OTDOA, the UE 10 receives downlink positioning reference signals (PRSs) from a plurality of transmission points (TPs), and reports measured values regarding the physical cell ID, global cell ID, TP ID, and PRS timing to the LMF through the LTE positioning protocol (LPP). The LMF calculates the location of the UE 10 based on information regarding the known coordinates of each measured TP and the relative timing of the reported PRS.

For example, in positioning using CID, the LMF calculates the location of the UE 10 based on information regarding the known coordinates of ng-eNBs or a gNBs and the following measurement results reported from the UE 10. The UE 10 reports, to the LMF, for example, measurement results regarding evolved cell global identifier (ECGI) or physical cell ID, reference signal received power (RSRP), Reference signal received quality (RSRQ), and UE Rx-Tx time difference. Here, the UE Rx-Tx time difference is defined as a time difference between the timing at which the UE 10 received and the timing at which the UE 10 transmitted.

The AMF 301 activates one or more candidates for capacity boost cell to be activated, based on the identified location of the UE 10 and the S-NSSAI (eMBB_3) included in the PDU session establishment request (or service request) (S702).

The AMF 301 transmits a notification to instruct activation of the identified capacity boost cell candidate(s) (e.g., gNB 20-32) (S703).

When the gNB 20-32 receives the notification to instruct activation, the gNB 20-32 performs settings necessary to operate as a base station, and transmits a RAN configuration update message to the AMF 301 (S704).

When receiving the RAN configuration update message, the AMF 301 transmits a RAN configuration update acknowledge message as a response (S705).

When the gNB 20-32 receives the RAN configuration update acknowledge message, the gNB 20-32 starts operating as a base station (S706).

Here, a plurality of states may be defined as the off state of the capacity boost cell. For example, the states include a first off state in which only an RF unit of the base station device that provides a capacity boost cell is in an off state, and a second off state in which not only the RF unit but also a baseband processing unit is in an off state. In a case where the network frequently activates/deactivates the capacity boost cell, the first off state is set as the off state, and in a case where the capacity boost cell is turned off for a relatively long period of time, the second off state is set as the off state.

In the measurement of the carrier frequency corresponding to the S-NSSAI (eMBB_3) in step S530 of Fig. 6A, when a preset timer expires, the UE 10 may transmit a cell configuration request including the S-NSSAI (eMBB_3) and information regarding the location information of the UE 10 to the AMF 301. When receiving the cell configuration request, the AMF 301 starts the processing of controlling the capacity boost cell from step S701 and subsequent steps in Fig. 13. The information on the expiration of the timer may be included in the setting information including the first information for setting the measurement (first measurement) described above, and may be acquired by the UE 10 in advance in the registration procedure (e.g., step S411 in Fig. 3).

Here, the expiration of the timer may be set as one of the measurement parameters set in the UE 10 by the network. When the UE 10 transmits the cell configuration request to the AMF 301, the UE 10 may set a second expiration (e.g., an offset period) for a timer, and may be configured to not transmit the cell configuration request again for a period until the second expiration of the timer to be newly started is finished. With this control, it is possible to avoid repeatedly transmitting the cell configuration request to the AMF 301 outside of the range of the cell that supports the S-NSSAI (eMBB_3).

As described above, by introducing activation/deactivation control of a capacity boost cell depending on a network slice in an on-demand manner according to a service request, power consumption of network devices can be reduced. In particular, the coverage of a cell that supports high frequencies becomes narrower, and the probability that the UE 10 is in the area is reduced, so that it is expected that activation/deactivation control will have a large effect in reducing power consumption. In addition, in the connection procedure for using the S-NSSAI (eMBB_3) illustrated in Figs. 4A and 4B, it is also possible to solve the problem that the UE 10 does not know when it will be able to be within the coverage of the gNB 20-32.

Here, the activation control of the capacity boost cell may be started by the network (e.g., AMF 301) according to a service request, or the UE 10 may request the network to activate the capacity boost cell.

In a case where a base station device forms a plurality of cells, the activation/deactivation control may be performed on a cell-by-cell basis. In this case, each cell may be configured in units of carrier frequencies, for example. The concept of cell may also be a coverage provided by one or more beams. This set of one or more beams can substitute for a cell. Each beam is identified for each SS/PBCH block. In other words, the concept of cell may include a set of SS/PBCH blocks.

Furthermore, in a case where a cell band is made up of a plurality of bandwidth parts (BWPs), the activation/deactivation control may be performed in units of BWPs.

The gNB 20-11 may request activation of a capacity boost cell based on a measurement report reported from the UE 10 in RRC_CONNECTED mode. The gNB 20-11 evaluates the quality of cells that support the S-NSSAI (eMBB_3), included in the measurement report, and requests the AMF 301 to activate the capacity boost cell that supports the S-NSSAI (eMBB_3), which is a candidate cell for handover, according to preset criteria. When receiving the request to activate the capacity boost cell, the AMF 301 starts processing of S701 and subsequent steps. Here, the information regarding the location of the UE 10 may be included in the measurement report or may be acquired from the LMF. Instead of requesting the AMF 301 to activate the capacity boost cell, the gNB 20-11 may directly request the candidate cell for handover to activate. The AMF 301 or the gNB 20-11 can identify neighboring cells of the capacity boost cell currently used by the UE 10 as candidates for capacity boost cell to be activated.

Here, a capacity boost cell is configured together with a central unit (CU) that constitutes a base station that provides a basic coverage cell, and is configured as a distributed unit (DU). A capacity boost cell is configured together with a CU and a DU that constitute a base station that provides a basic coverage cell, and is configured as a radio unit (RU). The network performs mobility management for the UE 10 on a basic coverage cell basis that involves CU switching between different CUs, and mobility management on a capacity boost cell basis that switches DUs or RUs within the same CU. For example, in RRC_IDLE mode, only the mobility management on a basic coverage cell basis is performed, and in RRC_CONNECTED mode or RRC_INACTIVE mode, the mobility management on a capacity boost cell basis is performed in addition to the mobility management on a basic coverage cell basis. For example, the mobility management on a capacity boost cell basis may include mobility management on a SS/PBCH block basis that identifies a beam.

As described above, according to the present embodiment, it is possible to start the PDU session establishment procedure for using the first network slice within the coverage of the cell corresponding to the first network slice to be used among the plurality of network slices. Therefore, it is expected to solve the problem that the service of the first network slice may be received in a poor quality condition, or the issue that it may take a long time to wait for the start of the service of the first network slice. In addition, by introducing activation/deactivation control of a capacity boost cell depending on a network slice in an on-demand manner according to a service request, it is expected to reduce power consumption of network devices.

The above-described embodiments are examples for embodying the present disclosure, and the present disclosure can be implemented in various other forms. For example, various modifications, substitutions, omissions, or combinations thereof are possible without departing from the spirit and scope of the present disclosure. Forms representing such modifications, replacements, omissions, and the like also fall within the scope of the present disclosure as well as the scopes of the invention as set forth in the scope of claims and equivalents thereof.

In addition, the effects of the present disclosure described herein are merely exemplary and may have other effects.

The present disclosure can have the following configuration.
(1) A terminal device including:
   a transceiver; and
   a processor,
   wherein the processor is configured to
   decide to use a first network slice of one or more network slices, perform first measurement of one or more frequencies used for the first network slice, and
   when a result of the first measurement fulfills a threshold value, transmit a PDU session establishment request message or a service request message to a management device via an access node (AN), and
   is configured to acquire, from the AN, setting information prior to deciding to use the first network slice, the setting information including first information for setting the first measurement.
(2) The terminal device according to (1), wherein the processor is configured to further perform second measurement for selecting or reselecting a cell to camp on or for measuring a cell to be a handover target.
(3) The terminal device according to (2), wherein the setting information further includes second information for setting the second measurement for selecting or reselecting a cell to camp on.
(4) The terminal device according to (2), wherein the setting information further includes second information for setting the second measurement for measuring a cell to be a handover target.
(5) The terminal device according to (1), wherein
   the processor is further configured to acquire, from the AN, network slice selection assistance information including information for identifying one or more network slices that are allowed to be used within a registration area, and the first information for setting the first measurement includes information regarding one or more frequencies used for each network slice included in the network slice selection assistance information.
(6) The terminal device according to (5), wherein the processor is configured to identify, based on the information regarding one or more frequencies used for each network slice included in the first information, the one or more of frequencies used for the first network slice.
(7) The terminal device according to (5), wherein
   the network slice selection assistance information includes information regarding a second network slice as a default from among the one or more network slices, and
   the processor is configured to identify a frequency used for the second network slice as a frequency for selecting or reselecting a cell to camp on or for measuring a cell to be a handover target.
(8) The terminal device according to (7), wherein the network slices are classified on the basis of a slice/service type (SST), and the network slice selection assistance information includes the second network slice as a default for each of the SST.
(9) The terminal device according to (1), wherein
   the setting information includes information regarding an expiration of a timer, and
   the processor is configured to, when the timer expires, transmit, to the management device, a cell configuration request for configuring a cell that provides the first network slice.
(10) The terminal device according to (9), wherein the processor is configured to include, in the cell configuration request, information regarding a location of the terminal device according to (9) and information for identifying the first network slice.
(11) The terminal device according to (9), wherein
   the setting information includes information regarding a second expiration of a timer, and
   the processor is configured to, when the timer expires, set the second expiration to the timer, and not transmit, to the management device, a second cell configuration request for a period until the second expiration of the timer to be newly started is finished.
(12) The terminal device according to (2), wherein the processor is configured to decide on the basis of a frequency band classification whether to include, in the first measurement or in the second measurement, the one or more of frequencies used for the first network slice.
(13) The terminal device according to (12), wherein the processor is configured to receive information regarding the frequency band classification from a base station device.
(14) The terminal device according to (13), wherein the frequency band classification includes FR1 and FR2.
(15) The terminal device according to (5), wherein
   the network slice selection assistance information includes information indicating relative priorities of the one or more of the network slices, and
   the processor is configured to identify a frequency used for a second network slice given a highest priority as a frequency for selecting or reselecting a cell to camp on or for measuring a cell to be a handover target.
(16) The terminal device according to (15), wherein
   the network slices are classified into groups, and
   the network slice selection assistance information includes information indicating the relative priority of the network slice that are given a relative priority for each group.
(17) The terminal device according to (16), wherein each of the groups corresponds to slice/service type (SST).
(18) A base station device including:
   a transceiver; and
   a processor,
   wherein the processor is configured to
   generate setting information for measurement of one or more frequencies used for each of one or more network slices,
   provide the setting information for measurement to a terminal device,
   acquire, from the terminal device, a request for using a first network slice among the one or more network slices and a measurement result of one or more frequencies used for the first network slice,
   when the measurement result fulfills a threshold value, start procedure of establishing or updating a PDU session including a cell operating at the frequency, and
   provide the setting information for measurement to the terminal device before receiving the request for using the first network slice.
(19) The base station device according to (18), wherein
   the processor is configured to
   acquire, from a management device, network slice selection assistance information including information for identifying one or more network slices that are allowed to be used within a registration area, and
   the setting information for measurement is information for identifying the one or more of frequencies used for each of the one or more network slices included in the network slice selection assistance information.
(20) The base station device according to (19), wherein
   the processor is configured to
   acquire, from a management device, information regarding a second network slice as a default from among the one or more network slices included in the network slice selection assistance information, and
   include, in the setting information for measurement, information for identifying a second frequency for selecting or reselecting a cell to camp on or for measuring a cell to be a handover target, based on the second network slice.
(21) The base station device according to (20), wherein the network slices are classified on the basis of a slice/service type (SST), and the processor is configured to acquire the information regarding the second network slice as a default for each of the SST.
(22) The base station device according to (18), wherein
   the processor is configured to
   acquire information regarding a neighboring cell from another base station device, and
   generate the setting information for measurement based on the information regarding the neighboring cell.
(23) The base station device according to (18), wherein
   the processor is configured to
   evaluate, based on the measurement result acquired from the terminal device, a cell to which the first network slice is provided, and transmit a cell configuration request for configuring another cell that provides the first network slice, according to preset criteria.
(24) A management device including:
   a communication unit; and
   a processor,
   wherein the processor is configured to
   generate network slice selection assistance information including information for identifying one or more network slices that are allowed to be used within a registration area,
   generate setting information for measurement of one or more frequencies used for each of the one or more network slices included in the network slice selection assistance information,
   provide the network slice selection assistance information and the setting information for measurement to a base station device, and
   when a result of a measurement executed on the basis of the network slice selection assistance information and the setting information for measurement fulfills a threshold value, execute processing related to a PDU session establishment request or a service request for a first network slice that has been decided to be used among the one or more network slices is executed, and
   the processor provides the network slice selection assistance information and the setting information for measurement before a decision to use the first network slice is made.
(25) The management device according to (24), wherein the setting information for measurement is information for identifying the one or more of frequencies used for each of the one or more network slices included in the network slice selection assistance information.
(26) The management device according to (25), wherein
   the processor is configured to
   generate information regarding a second network slice as a default from among the one or more network slices included in the network slice selection assistance information, and
   provide the information regarding the second network slice to the base station device, and
   the setting information for measurement includes information for identifying a second frequency for selecting or reselecting a cell to camp on or for measuring a cell to be a handover target, based on the second network slice.
(27) The management device according to (26), wherein the network slices are classified on the basis of a slice/service type (SST), and the processor is configured to generate the information regarding the second network slice as a default for each of the SST.
(28) The management device according to (24), wherein
   the processor is configured to
   acquire information for identifying the first network slice and information regarding a location of a terminal device,
   identify a cell that provides the first network slice based on the information regarding the location of the terminal device, and
   transmit a notification to instruct activation of the identified cell.
(29) The management device according to (28), wherein
   the processor is configured to
   acquire the information regarding the location of the terminal device from a location management function (LMF).
(30) A method including:
   deciding to use a first network slice of one or more network slices;
   performing a measurement of one or more frequencies used for the first network slice;
   when a result of the measurement fulfills a threshold value, transmitting a PDU session establishment request message or a service request message to a management device via an access node (AN); and
   acquiring, from the AN, setting information for the measurement prior to deciding to use the first network slice.

### [Reference Signs List]

10 Terminal device (UE: user equipment)
11 Communication unit
111 Reception processing unit
111a Radio reception unit
111b Demultiplexing unit
111c Demodulation unit
111d Decoding unit
112 Transmission processing unit
112a Encoding unit
112b Modulation unit
112c Multiplexing unit
112d Radio transmission unit
113 Antenna
12 Storage unit
13 Control unit
131 Network slice control unit
132 Measurement control unit
133 Communication control unit
20 Base station device ((R)AN)
21 Communication unit
211 Reception processing unit
211a Radio reception unit
211b Demultiplexing unit
211c Demodulation unit
211d Decoding unit
212 Transmission processing unit
212a Encoding unit
212b Modulation unit
212c Multiplexing unit
212d Radio transmission unit
213 Antenna
22 Storage unit
23 Network communication unit
24 Control unit
241 Neighboring cell information management unit
242 Radio resource control unit
243 Network slice control unit
244 Communication control unit
30 Core network (5GC/NGC)
301 Access and mobility management function (AMF)
302 Network exposure function (NEF)
303 Network repository function (NRF)
304 Network slice selection function (NSSF)
305 Policy control function (PCF)
306 Session management function (SMF)
307 Unified data management (UDM)
308 Application function (AF)
309 Authentication server function (AUSF)
310 UE radio capability management function (UCMF)
330 User plane function (UPF)
340 Data network (DN)

## Claims

1. A terminal device comprising:
a transceiver; and
a processor,
wherein the processor is configured to
decide to use a first network slice of one or more network slices, perform first measurement of one or more frequencies used for the first network slice, and
when a result of the first measurement fulfills a threshold value, transmit a PDU session establishment request message or a service request message to a management device via an access node (AN), and
is configured to acquire, from the AN, setting information prior to deciding to use the first network slice, the setting information including first information for setting the first measurement.

2. The terminal device according to claim 1, wherein the processor is configured to further perform second measurement for selecting or reselecting a cell to camp on or for measuring a cell to be a handover target.

3. The terminal device according to claim 2, wherein the setting information further includes second information for setting the second measurement for selecting or reselecting a cell to camp on.

4. The terminal device according to claim 2, wherein the setting information further includes second information for setting the second measurement for measuring a cell to be a handover target.

5. The terminal device according to claim 1, wherein
the processor is further configured to acquire, from the AN, network slice selection assistance information including information for identifying one or more network slices that are allowed to be used within a registration area, and
the first information for setting the first measurement includes information regarding one or more frequencies used for each network slice included in the network slice selection assistance information.

6. The terminal device according to claim 5, wherein the processor is configured to identify, based on the information regarding one or more frequencies used for each network slice included in the first information, the one or more of frequencies used for the first network slice.

7. The terminal device according to claim 5, wherein
the network slice selection assistance information includes information regarding a second network slice as a default from among the one or more network slices, and
the processor is configured to identify a frequency used for the second network slice as a frequency for selecting or reselecting a cell to camp on or for measuring a cell to be a handover target.

8. The terminal device according to claim 7, wherein the network slices are classified on the basis of slice/service type (SST), and the network slice selection assistance information includes the second network slice as a default for each of the SST.

9. The terminal device according to claim 1, wherein
the setting information includes information regarding an expiration of a timer, and
the processor configured to, when the timer expires, transmit, to the management device, a cell configuration request for configuring a cell that provides the first network slice.

10. Abase station device comprising:
a transceiver; and
a processor,
wherein the processor configured to
generate setting information for measurement of one or more frequencies used for each of one or more network slices,
provide the setting information for measurement to a terminal device, acquire, from the terminal device, a request for using a first network slice among the one or more network slices and a measurement result of the one or more frequencies used for the first network slice,
when the measurement result fulfills a threshold value, start procedure of establishing or updating a PDU session including a cell operating at the frequency, and
provide the setting information for measurement to the terminal device before receiving the request for using the first network slice.

11. The base station device according to claim 10, wherein
the processor is configured to
acquire, from a management device, network slice selection assistance information including information for identifying one or more network slices that are allowed to be used within a registration area, and
the setting information for measurement is information for identifying the one or more of frequencies used for each of the one or more network slices included in the network slice selection assistance information.

12. The base station device according to claim 11, wherein
the processor is configured to
acquire, from the management device, information regarding a second network slice as a default from among the one or more network slices included in the network slice selection assistance information, and
include, in the setting information for measurement, information for identifying a second frequency for selecting or reselecting a cell to camp on or for measuring a cell to be a handover target, based on the second network slice.

13. The base station device according to claim 12, wherein the network slices are classified on the basis of a slice/service type (SST), and the processor is configured to acquire the information regarding the second network slice as a default for each of the SST.

14. The base station device according to claim 11, wherein
the processor configured to
acquire information regarding a neighboring cell from another base station device, and
generate the setting information for measurement based on the information regarding the neighboring cell.

15. A management device comprising:
a communication unit; and
a processor,
the processor is configured to
generate network slice selection assistance information including information for identifying one or more network slices that are allowed to be used within a registration area,
generate setting information for measurement of one or more frequencies used for each of the one or more network slices included in the network slice selection assistance information,
provide the network slice selection assistance information and the setting information for measurement to a base station device, and
when a result of a measurement executed on the basis of the network slice selection assistance information and the setting information for measurement fulfills a threshold value, execute processing related to a PDU session establishment request or a service request for a first network slice that has been decided to be used among the one or more network slices is executed, and
provides the network slice selection assistance information and the setting information for measurement before a decision to use the first network slice is made.

16. The management device according to claim 15, wherein the setting information for measurement is information for identifying the one or more of frequencies used for each of the one or more network slices included in the network slice selection assistance information.

17. The management device according to claim 16, wherein
the processor is configured to
generate information regarding a second network slice as a default from among the one or more network slices included in the network slice selection assistance information, and
provide the information regarding the second network slice to the base station device, and
the setting information for measurement includes information for identifying a second frequency for selecting or reselecting a cell to camp on or for measuring a cell to be a handover target, based on the second network slice.

18. The management device according to claim 17, wherein the network slices are classified on the basis of a slice/service type (SST), and the processor is configured to generate the information regarding the second network slice as a default for each SST.

19. The management device according to claim 15, wherein
the processor configured to
acquire information for identifying the first network slice and information regarding a location of a terminal device,
identify a cell that provides the first network slice based on the information regarding the location of the terminal device, and
transmit a notification to instruct activation of the identified cell.

20. A method comprising:
deciding to use a first network slice of one or more network slices;
performing a measurement of one or more frequencies used for the first network slice;
when a result of the measurement fulfills a threshold value, transmitting a PDU session establishment request message or a service request message to a management device via an access node (AN); and
acquiring, from the AN, setting information for the measurement prior to deciding to use the first network slice.
